# EUROPEAN PATENT SPECIFICATION

(11) **EP 1 640 976 B1**
(45) Date of publication and mention of the grant of the patent: **05.12.2007**
(21) Application number: 05020814.9
(22) Date of filing: 23.09.2005
(51) Int. Cl.: G11B 5/702

(54) **Magnetic recording medium**
Magnetisches Aufzeichnungsmittel
Moyen d' enregistrement magnétique

(30) Priority: 27.09.2004 JP 2004279446
(43) Date of publication of application: 29.03.2006
(73) Proprietor: FUJIFILM Corporation, Minato-ku Tokyo (JP)
(72) Inventor: Murayama, Yuichiro, Odawara-shi, Kanagawa (JP); Hashimoto, Hiroshi, Odawara-shi, Kanagawa (JP)
(74) Representative: HOFFMANN EITLE

(56) References cited:
- EP-A- 1 463 036

## Description

The present invention relates to a magnetic recording medium having excellent electromagnetic conversion characteristics and durability.

As tape-form magnetic recording media for audio, video, and computers, and disc-form magnetic recording media such as flexible discs, a magnetic recording medium has been used in which a magnetic layer having dispersed in a binder a ferromagnetic powder such as γ-iron oxide, Co-containing iron oxide, chromium oxide, or a ferromagnetic metal powder is provided on a support. With regard to the support used in the magnetic recording medium, polyethylene terephthalate, polyethylene naphthalate, etc. are generally used. Since these supports are drawn and are highly crystallized, their mechanical strength is high and their solvent resistance is excellent.

The magnetic layer, which is obtained by coating the support with a coating solution having the ferromagnetic powder dispersed in the binder, has a high degree of packing of the ferromagnetic powder, low elongation at break, and is brittle, and it is therefore easily destroyed by the application of mechanical force and might peel off from the support. In order to prevent this, an undercoat layer is provided on the support so as to make the magnetic layer adhere strongly to the support.

For example, magnetic recording media having an undercoat layer formed using a difunctional aliphatic compound as a compound having a functional group that is cured by radiation such as an electron beam, that is, as a radiation curing compound are known (ref., JP-A-60-133529, JP-A-60-133530, JP-A-60-150227 and JP-B-5-57647 (JP-A denotes a Japanese unexamined patent application publication and JP-B denotes a Japanese examined patent application publication)). These aliphatic compounds give a cured coating having a glass transition temperature of at most on the order of 40°C, and there might be a problem with tackiness during a coating step after the undercoat layer is applied.

These aliphatic radiation curing compounds can prevent the problem with tackiness by increasing the number of (meth)acryloyl functional groups. However, when the number of functional groups is increased, shrinkage during curing increases thus making it impossible to obtain a smooth coating, or the adhesion to a polyethylene terephthalate (PET), polyethylene naphthalate (PEN), etc. support is degraded thus making it impossible to obtain adequate transport durability and electromagnetic conversion characteristics.

On the other hand, examples are known in which an electron beam-curing compound having a cyclic structure (JP-A-61-13430 and JP-A-58-146023) or an electron beam-curing compound formed from phthalic acid and a polyether polyol (JP-A-61-13430) is used in an undercoat layer. In JP-A-58-146023, one obtained by reacting a diisocyanate compound with a compound having an electron beam-curing functional group and a group that reacts with an isocyanate is used. The diisocyanate compound is one having an aromatic ring, such as tolylene diisocyanate. The compounds described in JP-A-61-13430 and JP-A-58-146023 have the defects that the cured coating easily becomes brittle, adhesion to the support becomes insufficient, and the magnetic coating easily comes off during transport.

Furthermore, since the electron beam-curing compound described in JP-A-61-13430 is an ester compound, it has defects in terms of storage stability, such as undergoing hydrolysis.

Recently, a playback head employing MR (magnetoresistance) as the operating principle has been proposed, its use in hard disks, etc. has started, and its application to magnetic tape has been proposed (JP-A-8-227517). The MR head gives a playback output several times that of an induction type magnetic head; since it does not use an induction coil, equipment noise such as impedance noise is greatly reduced, and by reducing the noise of the magnetic recording medium it becomes possible to obtain a high S/N ratio. In other words, by reducing the magnetic recording medium noise, which had previously been hidden by equipment noise, recording and playback can be carried out well, and the high density recording characteristics are outstandingly improved.

However, the MR head has the problem that it generates noise (thermal noise) under the influence of microscopic heating; in particular, it has the problem that when it hits a projection present on the surface of a magnetic layer, the noise suddenly increases and continues, and in the case of digital recording the problem can be so serious that error correction is impossible. This problem of thermal noise becomes serious in a magnetic recording medium used in a system in which a recorded signal having a recording density of 0.78Mbit/mm² (0.5 Gbit/inch²) or higher is replayed.

In order to reduce such thermal noise, it is important to control the surface properties of the magnetic layer, and there has been a desire for suitable means to do this.

It is an object of the present invention to provide a magnetic recording medium having excellent transport durability and long-term storage stability and, furthermore, to provide a magnetic recording medium having excellent coating smoothness and electromagnetic conversion characteristics.

The object of the present invention has been attained by the magnetic recording medium of (1).
(1) A magnetic recording medium comprising a non-magnetic support and, above the support, a radiation-cured layer cured by exposing a layer comprising a radiation curing compound to radiation, and at least one magnetic layer comprising a ferromagnetic powder dispersed in a binder, the radiation curing compound comprising a compound A having a cyclic structure and two radiation curing functional groups per molecule and a compound B having no cyclic structure and three or more radiation curing functional groups per molecule.
   Preferred embodiments of the magnetic recording medium of the present invention are as follows.
(2) The magnetic recording medium according to (1), wherein the compound A is a compound represented by formula (1) or formula (2).

   B1-(A1)ₙ-X1-(A1')_{n'}-B1' (1)

   B2-(A2)ₘ-X2-(A2')_{m'}-B2' (2)

   where X1 is selected from the group below, 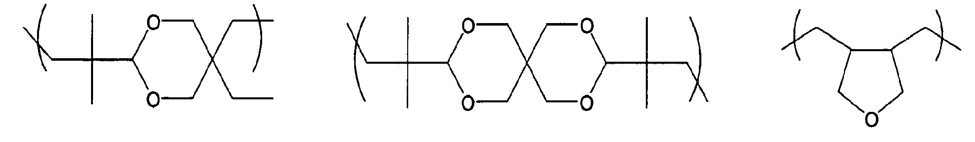 X2 is selected from the group below, 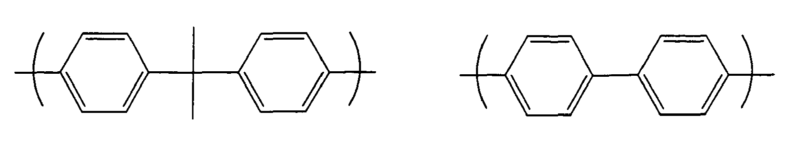 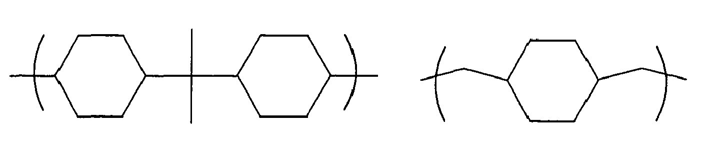 A1 and A2 are selected from the group below, 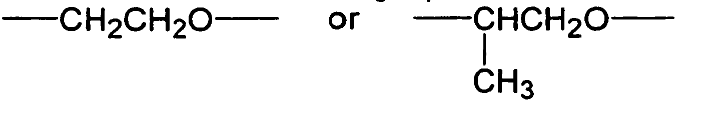 (here, A1 and A2 are bonded via an oxygen atom to X1 and X2 respectively) A1' and A2' are selected from the group below,
   or 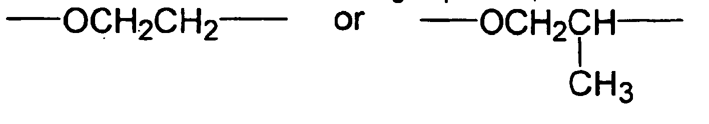 (here, A1' and A2' are bonded via an oxygen atom to X1 and X2 respectively) B1, B2, B1', and B2' are selected from the group below, 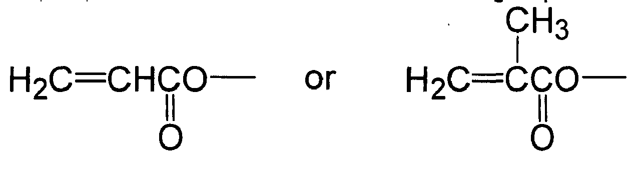 and n, n', m, and m' are independently 0 to 4.
(3) The magnetic recording medium according to (1) or (2), wherein the compound B is a compound having at least one ether group per molecule.

In accordance with the present invention, a magnetic recording medium having excellent coating smoothness and high electromagnetic conversion characteristics can be obtained. The magnetic recording medium of the present invention has improved peel-off strength and reduced dropouts. Furthermore, there is no problem with tackiness during coating and excellent storage stability can be obtained.

The magnetic recording medium of the present invention is a magnetic recording medium comprising a non-magnetic support and, above the support, a radiation-cured layer (also called an 'undercoat layer' in the present invention) cured by exposing a layer comprising a radiation curing compound to radiation, and at least one magnetic layer comprising a ferromagnetic powder dispersed in a binder, the radiation curing compound comprising a compound A having a cyclic structure and two radiation curing functional groups per molecule and a compound B having no cyclic structure and three or more radiation curing functional groups per molecule.

When energy is given by radiation such as an electron beam or ultraviolet rays, these compounds have the property of undergoing polymerization and/or crosslinking to become a macromolecule and be cured. Therefore, unless radiation is applied, a reaction does not proceed, a coating solution comprising such a compound has a stable viscosity unless radiation is applied, and high coating smoothness can be obtained. Furthermore, due to the high energy of the radiation, the reaction proceeds instantaneously, and high coating strength can be obtained.

The radiation-cured layer of the magnetic recording medium of the present invention employs, as the radiation curing compound, a compound having a cyclic structure and two radiation curing functional groups per molecule and a compound having no cyclic structure and three or more radiation curing functional groups per molecule. Since the radiation curing compound has a cyclic structure, excellent coating strength can be obtained, and faults such as sticking to a path roller, etc. in a coating step, etc. are avoided. On the other hand, when the radiation curing compound has a cyclic structure, the curability might be degraded, but in the present invention by using it in combination with a tri- or higher-functional compound having no cyclic structure (having three or more radiation curing functional groups per molecule), sufficient curability can be obtained even when there is a cyclic structure in a coating. In particular, by reducing unreacted components the durability of the magnetic recording medium during long-term storage becomes excellent.

Furthermore, by the combined use of the compounds having different chemical structures as magnetic recording materials of the present invention, it is possible to impart appropriate extensibility to the radiation-cured layer, the radiation-cured layer has high adhesion to the support and the magnetic layer, loss of the edge of the magnetic layer during processing or transport can be suppressed, and excellent durability can be obtained.

By coating the support with the two types of radiation curing compounds having different connecting portion structures, excellent electromagnetic conversion characteristics can be obtained. This is because projections on the surface of polyethylene terephthalate, polyethylene naphthalate, polyamide, etc. supports, which are generally known as supports for magnetic recording media, can be buried; in particular, microprojections originating from fillers contained in the support, which are thought to have a large effect on the electromagnetic conversion characteristics, can be eliminated, and microprojections of a lower layer and the magnetic layer can be reduced. As a result, an extremely smooth magnetic recording medium can be obtained. It can be expected that, since the viscosity of the radiation curing compound is relatively low, its leveling properties during coating will be excellent, and the effect in burying projections on the surface of the support will be large.

The compound A having a cyclic structure and two radiation curing functional groups per molecule, which can be used in the present invention, is one that has in its molecule a cyclic structure such as an aromatic ring, an alicyclic skeleton, or a cyclic ether and two radiation curing functional groups such as an acryloyl group or a methacryloyl group.

With regard to the radiation curing functional group, there can be cited a methacryloyl group or an acryloyl group, but an acryloyl group is preferable.

As the compound A, for example, a compound obtained by adding acrylic acid or methacrylic acid to a diol having a cyclic structure can be cited. It is also possible to use a urethane acrylate obtained by reacting a diol having a cyclic structure with acryloyloxyethyl isocyanate or a polyester acrylate obtained by reacting a dicarboxylic acid having a cyclic structure with a hydroxyacrylate or a hydroxymethacrylate.

The compound A is preferably a compound shown by formula (1) or formula (2).

B1-(A1)ₙ-X1-(A1')_{n'}-B1' Formula (1)

B2-(A2)ₘ-X2-(A2')_{m'}-B2' Formula (2)

Here, X1 is selected from the group below, 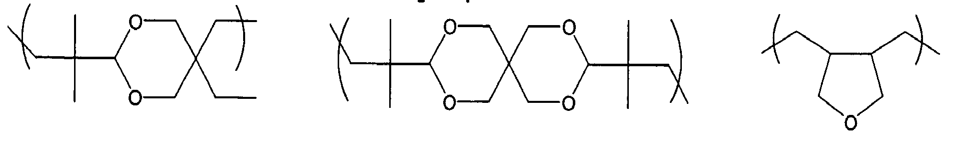 X2 is selected from the group below, 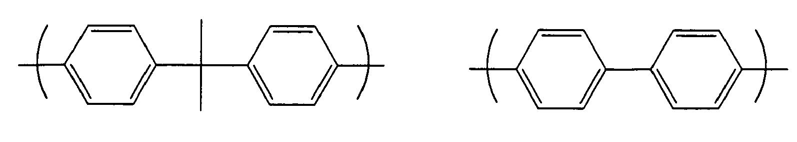 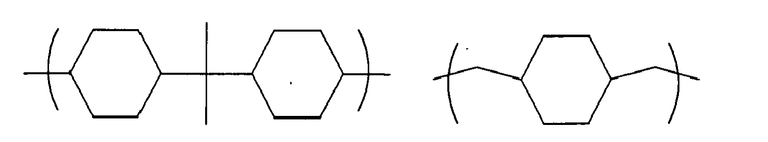 A1 and A2 are selected from the group below,
or 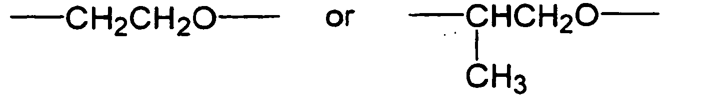 (here, A1 and A2 are bonded via an oxygen atom to X1 and X2 respectively)
A1' and A2' are selected from the group below, 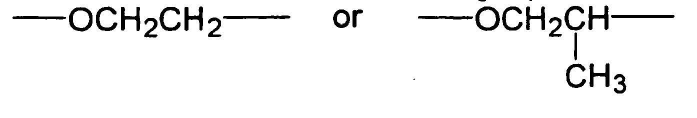 (here, A1' and A2' are bonded via an oxygen atom to X1 and X2 respectively)
B1, B2, B1', and B2' are selected from the group below, 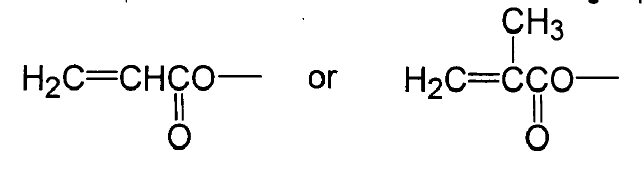 and n, n', m, and m' are independently 0 to 4.

Specific examples of the compound A are as follows.

Tetrahydrofurandimethanol diacrylate, tetrahydropyrandimethanol diacrylate, 1,3-dioxolane-2-ethanol-5-ethyl-5-hydroxymethyl-β,β-dimethyl diacrylate, 3,9-bis(1,1-dimethyl-2-hydroxyethyl)-2,4,8,10-tetraoxaspiro[5.5]undecane diacrylate, 5-ethyl-2-(2-hydroxy-1,1-dimethylethyl)-5-(hydroxymethyl)-1,3-dioxane diacrylate, tetrahydrofurandimethanol dimethacrylate, tetrahydropyrandimethanol dimethacrylate, 1,3-dioxolane-2-ethanol-5-ethyl-5-hydroxymethyl-β,β-dimethyl dimethacrylate, 3,9-bis(1,1-dimethyl-2-hydroxyethyl)-2,4,8,10-tetraoxaspiro[5.5]undecane dimethacrylate, and 5-ethyl-2-(2-hydroxy-1,1-dimethylethyl)-5-(hydroxymethyl)-1,3-dioxane dimethacrylate; and ethylene oxide adducts, propylene oxide adducts, etc. thereof.

Cyclohexanedimethanol ethylene oxide adduct diacrylate, bisphenol A ethylene oxide adduct diacrylate, hydrogenated bisphenol A ethylene oxide adduct diacrylate, hydroxybiphenyl ethylene oxide adduct diacrylate, bisphenol S ethylene oxide adduct diacrylate, hydrogenated bisphenol S ethylene oxide adduct diacrylate, bisphenol F ethylene oxide adduct diacrylate, hydrogenated bisphenol F ethylene oxide adduct diacrylate, bisphenol P ethylene oxide adduct diacrylate, hydrogenated bisphenol P ethylene oxide adduct diacrylate, diphenyl bisphenol A ethylene oxide adduct diacrylate, diphenyl bisphenol S ethylene oxide adduct diacrylate, diphenyl bisphenol F ethylene oxide adduct diacrylate, 5,5"-(1-methylethylidene)bis[(1,1'-bicyclohexyl)-2-ol] ethylene oxide adduct diacrylate, 4,4'-(1-methylethylidene)bis(2-methylcyclohexanol) ethylene oxide adduct diacrylate, 5,5"-cyclohexylidenebis[(1,1'-bicyclohexyl)-2-ol] ethylene oxide adduct diacrylate, 5,5"-cyclohexylmethylenebis[(1,1'-bicyclohexyl)-2-ol] ethylene oxide adduct diacrylate, cyclohexanedimethanol propylene oxide adduct diacrylate, bisphenol A propylene oxide adduct diacrylate, hydrogenated bisphenol A propylene oxide adduct diacrylate, hydroxybiphenyl propylene oxide adduct diacrylate, bisphenol S propylene oxide adduct diacrylate, hydrogenated bisphenol S propylene oxide adduct diacrylate, bisphenol F propylene oxide adduct diacrylate, hydrogenated bisphenol F propylene oxide adduct diacrylate, bisphenol P propylene oxide adduct diacrylate, hydrogenated bisphenol P propylene oxide adduct diacrylate, diphenyl bisphenol A propylene oxide adduct diacrylate, diphenyl bisphenol S propylene oxide adduct diacrylate, diphenyl bisphenol F propylene oxide adduct diacrylate, 5,5"-(1-methylethylidene)bis[(1,1'-bicyclohexyl)-2-ol] propylene oxide adduct diacrylate, 4,4'-(1-methylethylidene)bis(2-methylcyclohexanol) propylene oxide adduct diacrylate, 5,5"-cyclohexylidenebis[(1,1'-bicyclohexyl)-2-ol] propylene oxide adduct diacrylate, 5,5"-cyclohexylmethylenebis[(1,1'-bicyclohexyl)-2-ol] propylene oxide adduct diacrylate, cyclohexanedimethanol ethylene oxide adduct dimethacrylate, bisphenol A ethylene oxide adduct dimethacrylate, hydrogenated bisphenol A ethylene oxide adduct dimethacrylate, hydroxybiphenyl ethylene oxide adduct dimethacrylate, bisphenol S ethylene oxide adduct dimethacrylate, hydrogenated bisphenol S ethylene oxide adduct dimethacrylate, bisphenol F ethylene oxide adduct dimethacrylate, hydrogenated bisphenol F ethylene oxide adduct dimethacrylate, bisphenol P ethylene oxide adduct dimethacrylate, hydrogenated bisphenol P ethylene oxide adduct dimethacrylate, diphenyl bisphenol A ethylene oxide adduct dimethacrylate, diphenyl bisphenol S ethylene oxide adduct dimethacrylate, diphenyl bisphenol F ethylene oxide adduct dimethacrylate, 5,5"-(1-methylethylidene)bis[(1,1'-bicyclohexyl)-2-ol] ethylene oxide adduct dimethacrylate, 4,4'-(1-methylethylidene)bis(2-methylcyclohexanol) ethylene oxide adduct dimethacrylate, 5,5"-cyclohexylidenebis[(1,1'-bicyclohexyl)-2-ol] ethylene oxide adduct dimethacrylate, 5,5"-cyclohexylmethylenebis[(1,1'-bicyclohexyl)-2-ol] ethylene oxide adduct dimethacrylate, cyclohexanedimethanol propylene oxide adduct dimethacrylate, bisphenol A propylene oxide adduct dimethacrylate, hydrogenated bisphenol A propylene oxide adduct dimethacrylate, hydroxybiphenyl propylene oxide adduct dimethacrylate, bisphenol S propylene oxide adduct dimethacrylate, hydrogenated bisphenol S propylene oxide adduct dimethacrylate, bisphenol F propylene oxide adduct dimethacrylate, hydrogenated bisphenol F propylene oxide adduct dimethacrylate, bisphenol P propylene oxide adduct dimethacrylate, hydrogenated bisphenol P propylene oxide adduct dimethacrylate, diphenyl bisphenol A propylene oxide adduct dimethacrylate, diphenyl bisphenol S propylene oxide adduct dimethacrylate, diphenyl bisphenol F propylene oxide adduct dimethacrylate, 5,5"-(1-methylethylidene)bis[(1,1'-bicyclohexyl)-2-ol] propylene oxide adduct dimethacrylate, 4,4'-(1-methylethylidene)bis(2-methylcyclohexanol) propylene oxide adduct dimethacrylate, 5,5"-cyclohexylidenebis[(1,1'-bicyclohexyl)-2-ol] propylene oxide adduct dimethacrylate, and 5,5"-cyclohexylmethylenebis[(1,1'-bicyclohexyl)-2-ol] propylene oxide adduct dimethacrylate.

Preferred examples include 5-ethyt-2-(2-hydroxy-1,1 -dimethylethyl)-5-(hydroxymethyl)-1,3-dioxane diacrylate, tetrahydrofurandimethanol diacrylate, 3,9-bis(1,1-dimethyl-2-hydroxyethyl)-2,4,8,10-tetraoxaspiro[5.5]undecane diacrylate, cyclohexanedimethanol ethylene oxide adduct diacrylate, bisphenol A ethylene oxide adduct diacrylate, hydrogenated bisphenol A ethylene oxide adduct diacrylate, and hydroxybiphenyl ethylene oxide adduct diacrylate.

The compound B having no cyclic structure and three or more radiation curing functional groups per molecule, which can be used in the present invention, is obtained by a reaction of a polyhydric alcohol such as pentaerythritol, glycerol, trimethylolpropane, or dipentaerythritol, or an ethylene oxide or propylene oxide adduct thereof with a compound such as acrylic acid or methacrylic acid that has a radiation curing functional group and a group that reacts with a polyhydric alcohol.

It is also possible to react acetic acid, propionic acid, etc. as necessary, thus adjusting the number of radiation curing functional groups in the molecule.

The compound B has three or more radiation curing functional groups, but it is preferable for it to have 3 to 6 radiation curing functional groups. It is preferable if the compound B has 3 to 6 radiation curing functional groups since volume shrinkage during curing can be suppressed, and sufficient smoothness can be obtained.

As the radiation curing functional group, a methacryloyl group or an acryloyl group can be cited, but an acryloyl group is preferable.

It is also possible to use a urethane acrylate obtained by reacting an aliphatic diisocyanate such as hexamethylene diisocyanate with a compound having a group that reacts with an isocyanate group and three or more radiation curing functional groups, such as pentaerythritol triacrylate. Furthermore, it is possible to use a polyester acrylate obtained by reacting an aliphatic dicarboxylic acid such as adipic acid with a compound having a group that reacts with a carboxylic acid and three or more radiation curing functional groups, such as pentaerythritol triacrylate.

The compound B is preferably a compound having at least one ether group per molecule.

Specific examples thereof include trimethylolpropane triacrylate, trimethylolpropane ethylene oxide adduct triacrylate, trimethylolpropane propylene oxide adduct triacrylate, dipentaerythritol hexaacrylate, propionic acid-modified dipentaerythritol pentaacrylate, propionic acid-modified dipentaerythritol tetraacrylate, propionic acid-modified dipentaerythritol triacrylate, ditrimethylolpropane tetraacrylate, propionic acid-modified ditrimethylolpropane triacrylate, caprolactone-modified dipentaerythritol hexaacrylate, tripentaerythritol octaacrylate, propionic acid-modified tripentaerythritol heptaacrylate, propionic acid-modified tripentaerythritol hexaacrylate, propionic acid-modified tripentaerythritol pentaacrylate, propionic acid-modified tripentaerythritol tetraacrylate, propionic acid-modified tripentaerythritol triacrylate, tetrapentaerythritol decaacrylate, propionic acid-modified tetrapentaerythritol nonaacrylate, propionic acid-modified tetrapentaerythritol octaacrylate, propionic acid-modified tetrapentaerythritol heptaacrylate, propionic acid-modified tetrapentaerythritol heptaacrylate, propionic acid-modified tetrapentaerythritol hexaacrylate, propionic acid-modified tetrapentaerythritol pentaacrylate, propionic acid-modified tetrapentaerythritol tetraacrylate, and propionic acid-modified tetrapentaerythritol triacrylate.

Examples of the aliphatic dicarboxylic acid that can be used in the polyester acrylate include succinic acid, adipic acid, and azelaic acid. Examples of the aliphatic diisocyanate that can be used in the polyurethane acrylate include hexamethylene diisocyanate.

Among these, trimethylolpropane ethylene oxide adduct triacrylate, trimethylolpropane propylene oxide adduct triacrylate, and dipentaerythritol hexaacrylate are preferable.

It is preferable to use the compound A having a cyclic structure and two radiation curing functional groups per molecule and the compound B having no cyclic structure and three or more radiation curing functional groups per molecule at a ratio by weight of 3/7 to 7/3. It is preferable if the ratio is in the above-mentioned range since sufficient curability and coating strength can be obtained.

The viscosity of compound A and compound B is preferably equal to or less than 20,000 mPa·s at 25°C, more preferably 5 to 20,000 mPa·s, and yet more preferably 5 to 10,000 mPa·s. It is preferable if the viscosity is equal to or less than 20,000 mPa·s, since sufficient smoothness can be obtained.

A radiation-cured layer composition comprising the above-mentioned compounds can be used as a solution in a solvent as necessary. The viscosity of the radiation-cured layer composition is preferably 5 to 200 mPa·s at 25°C, and more preferably 5 to 100 mPa·s. If the viscosity is in the above-mentioned range, the leveling effect after the radiation-cured layer is applied can block projections of the support and give a smooth magnetic layer. As the solvent, methyl ethyl ketone (MEK), methanol, ethanol, toluene, etc. are preferable.

The radiation-cured layer composition is applied to the top of a support, dried, and then cured by exposure to radiation. The glass transition temperature (Tg) of the radiation-cured layer after curing is preferably 80°C to 150°C, and more preferably 100°C to 130°C. It is preferable if it is at least 80°C since there are few problems with tackiness during a coating step and if it is not more than 150°C since high coating strength can be obtained.

The thickness of the radiation-cured layer is preferably 0.1 to 1.0 µm, and more preferably 0.5 to 0.7 µm. It is preferable if it is at least 0.1 µm since sufficient smoothness can be obtained and if it is not more than 1.0 µm since adhesion to a support is good.

The modulus of elasticity of the radiation-cured layer is preferably 1.5 to 4 GPa. It is preferable if it is in this range since there are few problems with tackiness of a coating, and a desirable coating strength can be obtained.

The average surface roughness (Ra) of the radiation-cured layer is preferably 1 to 3 nm. It is preferable if it is in this range since there are few problems with sticking to a path roller, and the magnetic layer has sufficient smoothness.

With regard to the support that is used in the magnetic recording medium of the present invention, known biaxially drawn films such as polyethylene terephthalate, polyethylene naphthalate, polyamide, polyamideimide, and aromatic polyamide can be used. Polyethylene terephthalate, polyethylene naphthalate, and polyamide are preferred. These supports can be subjected in advance to a corona discharge treatment, a plasma treatment, a treatment for enhancing adhesion, a thermal treatment, etc. The support preferably has a surface smoothness of 3 to 10 nm for a cutoff value of 0.25 mm. The thickness of the support is preferably 3 to 80 µm.

The radiation-cured layer is formed by applying to the support and drying and then exposing to radiation so as to cure the compound.

The radiation used in the present invention may be an electron beam or ultraviolet rays. When ultraviolet rays are used, it is necessary to add a photopolymerization initiator to the compound. In the case of curing with an electron beam, no polymerization initiator is required, and in addition the electron beam has a deep penetration depth, which is preferable.

With regard to electron beam accelerators that can be used here, there are a scanning system, a double scanning system, and a curtain beam system, and the curtain beam system is preferable since it is relatively inexpensive and gives a high output. With regard to electron beam characteristics, the acceleration voltage is preferably 30 to 1,000 kV, and more preferably 50 to 300 kV. The absorbed dose is preferably 0.5 to 20 Mrad, and more preferably 2 to 10 Mrad. It is preferable if the acceleration voltage is at least 30 kV since the amount of energy penetrating is sufficient, and if it is not more than 1,000 kV since good energy efficiency is obtained for polymerization, which is economical. The electron beam irradiation atmosphere is preferably controlled by a nitrogen purge so that the concentration of oxygen is 200 ppm or less. It is preferable if the concentration of oxygen is low since crosslinking and curing reactions in the vicinity of the surface are not inhibited.

As a light source for the ultraviolet rays, a mercury lamp may be used. The mercury lamp is, for example, a 20 to 240 W/cm lamp and is used at a speed of 0.3 to 20 m/min. The distance between a substrate and the mercury lamp is generally preferably 1 to 30 cm.

As the photopolymerization initiator used for ultraviolet curing, a radical photopolymerization initiator may be used. More particularly, those described in, for example, 'Shinkobunshi Jikkengaku' (New Polymer Experiments), Vol. 2, Chapter 6 Photo/Radiation Polymerization (Published by Kyoritsu Publishing, 1995, Ed. by the Society of Polymer Science, Japan) can be used. Specific examples thereof include acetophenone, benzophenone, anthraquinone, benzoin ethyl ether, benzil methyl ketal, benzil ethyl ketal, benzoin isobutyl ketone, hydroxydimethyl phenyl ketone, 1-hydroxycyclohexyl phenyl ketone, and 2,2-diethoxyacetophenone. The mixing ratio of the aromatic ketone is preferably 0.5 to 20 parts by weight relative to 100 parts by weight of the radiation curing compound, more preferably 2 to 15 parts by weight, and yet more preferably 3 to 10 parts by weight.

With regard to radiation-curing equipment, conditions, etc., known equipment and conditions described in 'UV·EB Kokagijutsu' (UV/EB Radiation Curing Technology) (published by Sogo Gijutsu Center), 'Teienerugi Denshisenshosha no Oyogijutsu' (Application of Low-energy Electron Beam) (2000, Published by CMC), etc. can be employed.

In the magnetic recording medium of the present invention, the number of projections having a height, measured by atomic force microscopy (AFM), of 10 to 20 nm is 5 to 1,000 per 100 (µm)² of the surface of the magnetic layer. By providing the above-mentioned radiation-cured layer it is possible to control the number of magnetic layer surface projections within the above-mentioned range.

The height measured by atomic force microscopy (AFM) referred to here is defined as the height obtained using as a reference plane a center plane determined by atomic force microscopy (plane for which the volume enclosed by a roughness curve of the magnetic layer surface and the plane is the same above and below the plane and is a minimum).

Therefore, the number of projections having a height of 10 to 20 nm per 100 (µm)² of the surface of the magnetic layer (hereinafter also called the PN) means the density of projections, as the total number per 10 µm square, having a height relative to the reference plane of 10 to 20 nm. The PN is more preferably 5 to 100/100 (µm)². If the PN is at least 5, the coefficient of friction is low, and if the PN is not more than 1,000, the output is high and the number of dropouts (DO) tends to be small.

The magnetic recording medium of the present invention can be prepared by forming the above-mentioned radiation-cured layer, subsequently forming a non-magnetic lower layer or a magnetic lower layer on the radiation-cured layer, and then forming a magnetic layer, or alternatively by forming a magnetic layer directly on the radiation-cured layer. The radiation-cured layer may be provided on one side of a support or both sides thereof. The non-magnetic layer, the magnetic lower layer, or the magnetic layer may be formed by coating with a composition comprising a non-magnetic powder or a magnetic powder dispersed in a binder.

Examples of the binder include a polyurethane resin, a polyester resin, a polyamide resin, a vinyl chloride resin, an acrylic resin obtained by copolymerization of styrene, acrylonitrile, methyl methacrylate, etc., a cellulose resin such as nitrocellulose, an epoxy resin, a phenoxy resin, and a polyvinyl alkylal resin such as polyvinyl acetal or polyvinyl butyral, and they can be used singly or in a combination of two or more types. Among these, the polyurethane resin, the vinyl chloride resin, and the acrylic resin are preferable. In order to improve the dispersibility of the magnetic powder and the non-magnetic powder, the binder preferably has a functional group (polar group) that is adsorbed on the surface of the powders. Preferred examples of the functional group include -SO₃M, -SO₄M, -PO(OM)₂, -OPO(OM)₂, -COOM, R¹R²NSO₃M, R¹R²NRSO₃M, -NR¹R², and -N⁺R¹R²R³X⁻. M denotes a hydrogen atom or an alkali metal such as Na or K, R denotes an alkylene group, R¹, R², and R³ denote alkyl groups, hydroxyalkyl groups, or hydrogen atoms, R¹ and R² may together form a ring, and X denotes a halogen such as Cl or Br. The amount of functional group in the binder is preferably 10 to 200 µeq/g, and more preferably 30 to 120 µeq/g. It is preferable if it is in this range since good dispersibility can be achieved.

The binder preferably includes, in addition to the adsorbing functional group, a functional group having an active hydrogen, such as an -OH group, in order to improve the coating strength by reacting with an isocyanate curing agent so as to form a crosslinked structure. A preferred amount is 0.1 to 2 meq/g. The molecular weight of the binder is preferably 10,000 to 200,000 as a weight-average molecular weight, and more preferably 20,000 to 100,000. It is preferable if the weight-average molecular weight is at least 10,000 since the coating strength is high and the durability is good, and if it is not more than 200,000 since the dispersibility is good.

The polyurethane resin, which is a preferred binder, is described in detail in, for example, 'Poriuretan Jushi Handobukku' (Polyurethane Resin Handbook) (Ed., K. Iwata, 1986, The Nikkan Kogyo Shimbun, Ltd.), and it may normally be obtained by addition-polymerization of a long chain diol, a short chain diol (also known as a chain extending agent), and a diisocyanate compound. As the long chain diol, a polyester diol, a polyether diol, a polyetherester diol, a polycarbonate diol, a polyolefin diol, etc, having a molecular weight of 500 to 5,000 may be used. Depending on the type of this long chain polyol, the polyurethane is called a polyester urethane, a polyether urethane, a polyetherester urethane, a polycarbonate urethane, etc.

The polyester diol may be obtained by a condensation-polymerization between a glycol and a dibasic aliphatic acid such as adipic acid, sebacic acid, or azelaic acid, or a dibasic aromatic acid such as isophthalic acid, orthophthalic acid, terephthalic acid, or naphthalenedicarboxylic acid. Examples of the glycol component include ethylene glycol, 1,2-propylene glycol, 1,3-propanediol, 1,4-butanediol, 1,5-pentanediol, 3-methyl-1,5-pentanediol, 1,6-hexanediol, 2,2-dimethyl-1,3-propanediol, 1,8-octanediol, 1,9-nonanediol, cyclohexanediol, cyclohexanedimethanol, and hydrogenated bisphenol A. As the polyester diol, in addition to the above, a polycaprolactonediol or a polyvalerolactonediol obtained by ring-opening polymerization of a lactone such as ε-caprolactone or γ-valerolactone can be used. From the viewpoint of resistance to hydrolysis, the polyester diol is preferably one having a branched side chain or one obtained from an aromatic or alicyclic starting material.

Examples of the polyether diol include polyethylene glycol, polypropylene glycol, polytetramethylene glycol, aromatic glycols such as bisphenol A, bisphenol S, bisphenol P, and hydrogenated bisphenol A, and addition-polymerization products from an alicyclic diol and an alkylene oxide such as ethylene oxide or propylene oxide.

These long chain diols can be used as a mixture of a plurality of types thereof. The short chain diol can be chosen from the compound group that is cited as the glycol component of the above-mentioned polyester diol. Furthermore, a small amount of a tri- or higher-hydric alcohol such as, for example, trimethylolethane, trimethylolpropane, or pentaerythritol can be added, and this gives a polyurethane resin having a branched structure, thus reducing the solution viscosity and increasing the number of OH end groups of the polyurethane so as to improve the curability with the isocyanate curing agent.

Examples of the diisocyanate compound include aromatic diisocyanates such as MDI (diphenylmethane diisocyanate), 2,4-TDI (tolylene diisocyanate), 2,6-TDI, 1,5-NDI (naphthalene diisocyanate), TODI (tolidine diisocyanate), *p*-phenylene diisocyanate, and XDI (xylylene diisocyanate), and aliphatic and alicyclic diisocyanates such as trans-cyclohexane-1,4-diisocyanate, HDI (hexamethylene diisocyanate), lPDl (isophorone diisocyanate), H₆XDI (hydrogenated xylylene diisocyanate), and H₁₂MDl (hydrogenated diphenylmethane diisocyanate).

The long chain diol/short chain diol/diisocyanate ratio in the polyurethane resin is preferably (80 to 15 wt %)/(5 to 40 wt %)/(15 to 50 wt %). The concentration of urethane groups in the polyurethane resin is preferably 1 to 5 meq/g, and more preferably 1.5 to 4.5 meq/g. If the concentration of urethane groups is at least 1 meq/g, the mechanical strength is high, and if it is not more than 5 meq/g, the solution viscosity is low and the dispersibility is good. The glass transition temperature of the polyurethane resin is preferably 0°C to 200°C, and more preferably 40°C to 160°C. It is preferable if it is at least 0°C since the durability is high and if it is not more than 200°C since the calender moldability is good and the electromagnetic conversion characteristics improve. With regard to a method for introducing the adsorbing functional group (polar group) into the polyurethane resin, there are, for example, a method in which the functional group is used in a part of the long chain diol monomer, a method in which it is used in a part of the short chain diol, and a method in which, after the polyurethane is formed by polymerization, the polar group is introduced by a polymer reaction.

As the vinyl chloride resin, a copolymer of a vinyl chloride monomer and various types of monomer may be used. Examples of the comonomer include fatty acid vinyl esters such as vinyl acetate and vinyl propionate, acrylates and methacrylates such as methyl (meth)acrylate, ethyl (meth)acrylate, isopropyl (meth)acrylate, butyl (meth)acrylate, and benzyl (meth)acrylate, alkyl allyl ethers such as allyl methyl ether, allyl ethyl ether, allyl propyl ether, and allyl butyl ether, and others such as styrene, α-methylstyrene, vinylidene chloride, acrylonitrile, ethylene, butadiene, and acrylamide; examples of a comonomer having a functional group include vinyl alcohol, 2-hydroxyethyl (meth)acrylate, polyethylene glycol (meth)acrylate, 2-hydroxypropyl (meth)acrylate, 3-hydroxypropyl (meth)acrylate, polypropylene glycol (meth)acrylate, 2-hydroxyethyl allyl ether, 2-hydroxypropyl allyl ether, 3-hydroxypropyl allyl ether, *p*-vinylphenol, maleic acid, maleic anhydride, acrylic acid, methacrylic acid, glycidyl (meth)acrylate, allyl glycidyl ether, phosphoethyl (meth)acrylate, sulfoethyl (meth)acrylate, p-styrenesulfonic acid, and Na salts and K salts thereof. Here, (meth)acrylate means one that includes at least one of acrylate and methacrylate.

The proportion of the vinyl chloride monomer in the vinyl chloride resin is preferably 60 to 95 wt %. If it is at least 60 wt %, the mechanical strength improves, and if it is not more than 95 wt %, the solvent solubility is high, the solution viscosity is low, and as a result the dispersibility is good. A preferred amount of a functional group for improving the curability of the adsorbing functional group (polar group) with a polyisocyanate curing agent is as described above. With regard to a method for introducing these functional groups, a monomer containing the above-mentioned functional group can be copolymerized, or after the vinyl chloride resin is formed by copolymerization, the functional group can be introduced by a polymer reaction. A preferred degree of polymerization is 200 to 600, and more preferably 240 to 450. If the degree of polymerization is at least 200 the mechanical strength is high, and if it is not more than 600 the solution viscosity is low, and as a result the dispersibility is high.

In the present invention, in order to increase the mechanical strength and heat resistance of a coating by crosslinking and curing the binder, it is possible to use a curing agent. A preferred curing agent is a polyisocyanate compound. The polyisocyanate compound is preferably a tri- or higher-functional polyisocyanate. Specific examples thereof include adduct type polyisocyanate compounds such as a compound in which 3 moles of TDI (tolylene diisocyanate) are added to 1 mole of trimethylolpropane (TMP), a compound in which 3 moles of HDI (hexamethylene diisocyanate) are added to 1 mole of TMP, a compound in which 3 moles of IPDI (isophorone diisocyanate) are added to 1 mole of TMP, and a compound in which 3 moles of XDI (xylylene diisocyanate) are added to 1 mole of TMP, a condensed isocyanurate type trimer of TDI, a condensed isocyanurate type pentamer of TDI, a condensed isocyanurate heptamer of TDI, mixtures thereof, an isocyanurate type condensation product of HDI, an isocyanurate type condensation product of IPDI, and crude MDI. Among these, the compound in which 3 moles of TDI are added to 1 mole of TMP, and the isocyanurate type trimer of TDI are preferable.

Other than the isocyanate curing agents, a curing agent that cures when exposed to an electron beam, ultraviolet rays, etc. can be used. In this case, it is possible to use a curing agent having, as radiation curing functional groups, two or more, and preferably three or more, acryloyl or methacryloyl groups per molecule. Examples thereof include TMP (trimethylolpropane) triacrylate, pentaerythritol tetraacrylate, and a urethane acrylate oligomer. In this case, it is preferable to introduce a (meth)acryloyl group not only into the curing agent but also into the binder. In the case of curing with ultraviolet rays, a photosensitizer is additionally used. It is preferable to add 0 to 80 parts by weight of the curing agent relative to 100 parts by weight of the binder. When the content of the curing agent is in the above-mentioned range, the dispersibility is high.

As the ferromagnetic powder used in the magnetic recording medium of the present invention, ferromagnetic iron oxide, cobalt-containing ferromagnetic iron oxide, or a ferromagnetic alloy powder may be used. The specific surface area by the BET method (S_{BET}) is usually 40 to 80 m²/g, and preferably 50 to 70 m²/g. The crystallite size is usually preferably 12 to 25 nm, more preferably 13 to 22 nm, and particularly preferably 14 to 20 nm. The major axis length is usually 0.02 to 0.25 µm, preferably 0.03 to 0.20 µm, and particularly preferably 0.04 to 0.1 µm. Examples of the ferromagnetic metal powder include Fe, Ni, Fe-Co, Fe-Ni, and Co-Ni-Fe, and it is also possible to use an alloy containing, at up to 20 weight % of the metal component, aluminum, silicon, sulfur, scandium, titanium, vanadium, chromium, manganese, copper, zinc, yttrium, molybdenum, rhodium, palladium, gold, tin, antimony, boron, barium, tantalum, tungsten, rhenium, silver, lead, phosphorus, lanthanum, cerium, praseodymium, neodymium, tellurium, or bismuth. It is also possible for the ferromagnetic metal powder to contain a small amount of water, a hydroxide, or an oxide. The method for preparing these ferromagnetic powders is already known, and the ferromagnetic powder used in the present invention can be produced according to the known method. The shape of the ferromagnetic powder is not particularly limited and, for example, an acicular, granular, cuboidal, rice-grain shaped, or tabular powder is usually used. The use of an acicular ferromagnetic powder is particularly preferable.

The above-mentioned resin component, curing agent, and ferromagnetic powder are kneaded with and dispersed in a solvent such as methyl ethyl ketone, dioxane, cyclohexanone, or ethyl acetate, which are normally used for the preparation of a magnetic layer coating solution, to give a magnetic coating solution. The kneading and dispersing can be carried out by a standard method. The magnetic recording medium of the present invention may include a non-magnetic lower coated layer or a magnetic lower coated layer comprising a non-magnetic powder or a magnetic powder. The non-magnetic powder can be selected from an inorganic compound such as a metal oxide, a metal carbonate, a metal sulfate, a metal nitride, a metal carbide and a metal sulfide. As the inorganic compound, α-alumina with an α-component proportion of 90% to 100%, β-alumina, γ-alumina, silicon carbide, chromium oxide, cerium oxide, α-iron oxide, corundum, silicon nitride, titanium carbide, titanium oxide, silicon dioxide, tin oxide, magnesium oxide, tungsten oxide, zirconium oxide, boron nitride, zinc oxide, calcium oxide, calcium sulfate, barium sulfate, molybdenum disulfide, etc. can be used singly or in combination. Titanium dioxide, zinc oxide, iron oxide, and barium sulfate are particularly preferable, and titanium dioxide and iron oxide are more preferable. The average particle size of such a non-magnetic powder is preferably 0.005 to 2 µm, but it is also possible, as necessary, to combine non-magnetic powders having different particle sizes or widen the average particle size distribution of a single non-magnetic powder, thus producing the same effect. The average particle size of the non-magnetic powder is particularly preferably 0.01 to 0.2 µm. The pH of the non-magnetic powder is particularly preferably in the range of 6 to 9. The specific surface area of the non-magnetic powder is usually 1 to 100 m²/g, preferably 5 to 60 m²/g, more preferably 5 to 50 m²/g, and yet more preferably 7 to 40 m²/g. The crystallite size of the non-magnetic powder is preferably 0.01 to 2 µm. The oil absorption measured using DBP is usually 5 to 100 mL/100g, preferably 10 to 80 mL/100 g, and more preferably 20 to 60 mL/100 g. The specific gravity is preferably 1 to 12, and more preferably 3 to 6. The form may be any one of acicular, spherical, polyhedral, and tabular.

The surface of the non-magnetic powder is preferably subjected to a surface treatment so that Al₂O₃, SiO₂, TiO₂, ZrO₂, SnO₂, Sb₂O₃, or ZnO is present thereon. In terms of dispersibility in particular, Al₂O₃, SiO₂, TiO₂, and ZrO₂ are preferable, and Al₂O₃, SiO₂, and ZrO₂ are more preferable. They may be used in combination or singly. Depending on the intended purpose, a co-precipitated surface-treated layer may be used, or a method can be employed in which alumina is firstly used for treatment and the surface thereof is then treated with silica, or vice versa. The surface-treated layer may be formed as a porous layer depending on the intended purpose, but it is generally preferable for it to be uniform and dense.

As the magnetic powder that can be used in the lower coated layer, γ-Fe₂O₃, Co-modified γ-Fe₂O₃, an alloy having α-Fe as the main component, CrO₂, etc. can be used. In particular, Co-modified γ-Fe₂O₃ is preferable. The ferromagnetic powder used in the lower layer of the present invention preferably has a different composition and performance from those of the ferromagnetic powder used in the upper magnetic layer. For example, in order to improve long wavelength recording properties, the coercive force (Hc) of the lower magnetic layer is desirably set so as to be lower than that of the upper magnetic layer, and it is effective to set the residual magnetic flux density (Br) of the lower magnetic layer so as to be higher than that of the upper magnetic layer. In addition to the above, it is also possible to impart advantages arising from the employment of a known multilayer structure.

As an additive that is used in the magnetic layer and the lower coated layer in the present invention, one having a lubricating effect, an antistatic effect, a dispersing effect, a plasticizing effect, etc. may be used. Examples thereof include molybdenum disulfide, tungsten disulfide, graphite, boron nitride, graphite fluoride, a silicone oil, a polar group-containing silicone, a fatty acid-modified silicone, a fluorine-containing silicone, a fluorine-containing alcohol, a fluorine-containing ester, a polyolefin, a polyglycol, an alkyl phosphate and an alkali metal salt thereof, an alkyl sulfate and an alkali metal salt thereof, a polyphenyl ether, a fluorine-containing alkyl sulfate and an alkali metal salt thereof, a monobasic fatty acid having 10 to 24 carbons (which may contain an unsaturated bond and may be branched) and a metal salt thereof (with Li, Na, K, Cu, etc.), a mono-, di-, tri-, tetra-, penta- or hexa-hydric alcohol having 12 to 22 carbons (which may contain an unsaturated bond and may be branched), an alkoxy alcohol having 12 to 22 carbons (which may contain an unsaturated bond and may be branched), a mono-, di- or tri-fatty acid ester formed from a monobasic fatty acid having 10 to 24 carbons (which may contain an unsaturated bond and may be branched) and any one of mono-, di-, tri-, tetra-, penta- and hexa-hydric alcohols having 2 to 12 carbons (which may contain an unsaturated bond and may be branched), a fatty acid ester of a monoalkyl ether of an alkylene oxide polymer, a fatty acid amide having 2 to 22 carbons, and an aliphatic amine having 8 to 22 carbons. Specific examples thereof include lauric acid, myristic acid, palmitic acid, stearic acid, behenic acid, butyl stearate, oleic acid, linoleic acid, linolenic acid, elaidic acid, octyl stearate, amyl stearate, isooctyl stearate, octyl myristate, butoxyethyl stearate, anhydrosorbitan monostearate, anhydrosorbitan distearate, anhydrosorbitan tristearate, oleyl alcohol, and lauryl alcohol.

Furthermore, there are a nonionic surfactant such as an alkylene oxide type, a glycerol type, a glycidol type, or an alkylphenol-ethylene oxide adduct; a cationic surfactant such as a cyclic amine, an ester amide, a quaternary ammonium salt, a hydantoin derivative, a heterocyclic compound, a phosphonium salt, or a sulfonium salt; an anionic surfactant containing an acidic group such as a carboxylic acid, a sulfonic acid, a phosphoric acid, a sulfate ester group, or a phosphate ester group; and an amphoteric surfactant such as an amino acid, an aminosulfonic acid, a sulfate ester or a phosphate ester of an amino alcohol, or an alkylbetaine. Details of these surfactants are described in 'Kaimenkasseizai Binran' (Surfactant Handbook) (published by Sangyo Tosho Publishing). These lubricants, antistatic agents, etc. need not always be pure and may contain, in addition to the main component, an impurity such as an isomer, an unreacted material, a by-product, a decomposition product, or an oxide. However, the impurity content is preferably 30 wt % or less, and more preferably 10 wt % or less.

The type and the amount of the lubricant and surfactant used in the present invention can be changed as necessary in the non-magnetic layer and the magnetic layer. For example, their exudation to the surface is controlled by using fatty acids having different melting points for the non-magnetic layer and the magnetic layer or by using esters having different boiling points or polarity. The coating stability can be improved by regulating the amount of surfactant added, and the lubrication effect can be improved by increasing the amount of lubricant added to the non-magnetic layer, but the present invention should not be construed as being limited only to the examples illustrated here. All or a part of the additives used in the present invention may be added to a magnetic layer coating solution or a lower layer coating solution at any stage of its preparation. For example, the additives may be blended with a ferromagnetic powder prior to a kneading step, they may be added in a step of kneading a ferromagnetic powder, a binder, and a solvent, they may be added in a dispersing step, they may be added after dispersion, or they may be added immediately prior to coating.

Specific examples of these lubricants used in the present invention include NAA-102, hardened castor oil fatty acid, NAA-42, Cation SA, Nymeen L-201, Nonion E-208, Anon BF, Anon LG, butyl stearate, butyl laurate, and erucic acid (produced by Nippon Oil & Fats Co., Ltd.); oleic acid (produced by Kanto Kagaku); FAL-205, and FAL-123 (produced by Takemoto Oil & Fat Co., Ltd), Enujelv OL (produced by New Japan Chemical Co., Ltd.), TA-3 (produced by Shin-Etsu Chemical Industry Co., Ltd.), Armide P (produced by Lion Armour), Duomin TDO (produced by Lion Corporation), BA-41G (produced by The Nisshin Oil Mills, Ltd.), and Profan 2012E, Newpol PE 61, and lonet MS-400 (produced by Sanyo Chemical Industries, Ltd.).

By coating the surface of the radiation-cured layer on the support with a coating solution prepared using the above-mentioned materials, a lower coated layer or a magnetic layer can be formed. The method for producing the magnetic recording medium of the present invention involves, for example, coating the surface of the radiation-cured layer on the support, while it is running, with a magnetic layer coating solution so as to give a dry thickness of the magnetic layer in the range of 0.05 µm to 2.0 µm, preferably 0.05 to 1 µm, more preferably 0.05 to 0.5 µm, and particularly preferably 0.05 to 0.1 µm. When a non-magnetic layer is provided, the dry thickness of the non-magnetic layer is preferably 0.2 to 3.0 µm, more preferably 0.3 to 2.5 µm, and yet more preferably 0.4 to 2.0 µm. A plurality of magnetic layer coating solutions can be applied successively or simultaneously in multilayer coating, and a lower layer coating solution and a magnetic layer coating solution can also be applied successively or simultaneously in multilayer coating. As coating equipment for applying the above-mentioned magnetic coating solution or lower layer coating solution, an air doctor coater, a blade coater, a rod coater, an extrusion coater, an air knife coater, a squeegee coater, a dip coater, a reverse roll coater, a transfer roll coater, a gravure coater, a kiss coater, a cast coater, a spray coater, a spin coater, etc. can be used.

With regard to these, for example, 'Saishin Kotingu Gijutsu' (Latest Coating Technology) (May 31, 1983) published by Sogo Gijutsu Center can be referred to.

When the present invention is applied to a magnetic recording medium having an arrangement in which there is a lower layer (non-magnetic layer or magnetic layer), as examples of the coating equipment and the coating method, the following can be proposed.
(1) A lower layer is firstly applied by coating equipment such as gravure, roll, blade, or extrusion coating equipment, which is generally used for coating with a magnetic layer coating solution, and before the lower layer has dried an upper layer is applied by a pressurized support type extrusion coating device such as one disclosed in JP-B-1-46186, JP-A-60-238179, or JP-A-2-265672.
(2) Upper and lower layers are substantially simultaneously applied by means of one coating head having two slits for a coating solution to pass through, such as one disclosed in JP-A-63-88080, JP-A-2-17971, or JP-A-2-265672.
(3) Upper and lower layers are substantially simultaneously applied by means of an extrusion coating device with a backup roll, such as one disclosed in JP-A-2-174965.

The surface of the support used in the present invention that has not been coated with the magnetic coating solution may be provided with a back layer. The back layer is a layer provided by coating the surface of the support that has not been coated with the magnetic coating solution with a back layer-forming coating solution in which a particulate component such as an abrasive or an antistatic agent and a binder are dispersed in an organic solvent. As the particulate component, various types of inorganic pigment or carbon black can be used, and as the binder, a resin such as nitrocellulose, a phenoxy resin, a vinyl chloride resin, or a polyurethane can be used singly or in combination. In addition, the radiation-cured layer of the present invention or a known radiation-cured layer may be provided on the surface of the support that has been coated with the back layer coating solution.

The coated layer of the magnetic layer coating solution is dried after subjecting the ferromagnetic powder contained in the coated layer of the magnetic layer coating solution to a magnetic field alignment treatment. After drying is carried out in this way, the coated layer may be subjected to a surface smoothing treatment. The surface smoothing treatment may employ, for example, super calender rolls, etc. By carrying out the surface smoothing treatment, cavities formed by removal of the solvent during drying are eliminated, thereby increasing the packing ratio of the ferromagnetic powder in the magnetic layer, and a magnetic recording medium having high electromagnetic conversion characteristics can thus be obtained. With regard to calendering rolls, rolls of a heat-resistant plastic such as epoxy, polyimide, polyamide, or polyamideimide may be used. It is also possible to carry out treatment with metal rolls.

It is preferable for the magnetic recording medium of the present invention, as a high density recording magnetic recording medium, to have a surface that has a center line average roughness in the range of 0.1 to 5 nm, and preferably 1 to 4 nm for a cutoff value of 0.25 mm, which is extremely smooth. As a method therefor, a magnetic layer formed by selecting a specific ferromagnetic powder and binder as described above is subjected to the above-mentioned calendering treatment. With regard to calendering conditions, the calender roll temperature is preferably in the range of 60°C to 100°C, more preferably in the range of 70°C to 100°C, and yet more preferably in the range of 80°C to 100°C, and the calender roll pressure is preferably in the range of 100 to 500 kg/cm (98 to 490 kN/m), more preferably in the range of 200 to 450 kg/cm (196 to 441 kN/m), and yet more preferably in the range of 300 to 400 kg/cm (294 to 392 kN/m). The magnetic recording medium thus obtained can be cut to a desired size using a cutter, etc. before use.

### EXAMPLES

The present invention is explained specifically below with reference to examples, but the examples should not be construed as limiting the present invention. 'Parts' in the Examples denotes 'parts by weight'.

### Example 1

### Preparation of magnetic layer coating solution

100 parts of a ferromagnetic alloy powder (composition: Fe 89 atm %, Co 5 atm %, Y 6 atm %; Hc 158 kA/m² (2,000 Oe); crystallite size 15 nm; BET specific surface area 59 m²/g; major axis length 0.04 µm; acicular ratio 7; σs 150 A·m²/kg (emu/g)) was ground in an open kneader for 10 minutes, subsequently 10 parts (solids content) of an SO₃Na-containing polyurethane solution (solids content 30%, SO₃Na content 70 µeq/g, weight-average molecular weight 80,000) was added thereto, 30 parts of cyclohexanone was further added thereto, and the mixture was kneaded for 60 minutes.

Subsequently,

| | |
|---|---|
| an abrasive (Al₂O₃ particle size 0.3 µm) | 2 parts, |
| carbon black (particle size 40 µm) | 2 parts, and |
| methyl ethyl ketone/toluene = 1/1 | 200 parts |

were added thereto, and the mixture was dispersed in a sand mill for 120 minutes,

| | |
|---|---|
| butyl stearate | 2 parts, |
| stearic acid | 1 part, and |
| methyl ethyl ketone | 50 parts |

were further added thereto, the mixture was stirred and mixed for a further 20 minutes, and filtered using a filter having an average pore size of 1 µm to give a magnetic coating solution.

### Preparation of lower layer non-magnetic coating solution

100 parts of α-Fe₂O₃ (average particle size 0.15 µm, S_{BET} 52 m²/g, surface-treated with Al₂O₃ and SiO₂, pH 6.5 to 8.0) was ground in an open kneader for 10 minutes, subsequently 15 parts (solids content) of an SO₃Na-containing polyurethane solution (solids content 30%, SO₃Na content 70 µeq/g, weight-average molecular weight 80,000) was added thereto, 30 parts of cyclohexanone was further added thereto, and the mixture was kneaded for 60 minutes.

Subsequently,

| | |
|---|---|
| methyl ethyl ketone/cyclohexanone = 6/4 | 200 parts |

was added thereto, and the mixture was dispersed in a sand mill for 120 minutes. To this mixture,

| | |
|---|---|
| butyl stearate | 2 parts, |
| stearic acid | 1 part, and |
| methyl ethyl ketone | 50 parts |

were added, the mixture was stirred and mixed for a further 20 minutes, and filtered using a filter having an average pore size of 1 µm to give a lower layer coating solution.

Subsequently, the surface of a polyethylene terephthalate support having a thickness of 7 µm and a center line average surface roughness Ra of 6.2 nm was coated with a 30 wt % solution (MEK solution) of the radiation curing compounds A and B shown in Table 1 at a ratio by weight of 1/1 using a coiled bar so that the dry thickness thereof was 0.5 µm, dried, and cured by irradiating the coating surface with an electron beam at an acceleration voltage of 150 kV and an absorbed dose of 2 Mrad.

Subsequently, the top of the radiation-cured layer was coated with the non-magnetic coating solution, on top of which was further applied the magnetic coating solution by simultaneous reverse roll multilayer coating so that the dry thicknesses thereof were 0.5 µm and 0.1 µm respectively. Before the magnetic coating solution had dried, it was subjected to magnetic field alignment using a 5,000 G Co magnet and a 4,000 G solenoid magnet, and after the solvent was removed by drying, the coated support was subjected to a calender treatment employing a metal roll-metal roll-metal roll-metal roll-metal roll-metal roll-metal roll combination (speed 100 m/min, line pressure 300 kg/cm, temperature 90°C) and then slit to a width of 12.7 mm (1/2 inch).

### Examples 2 to 11 and Comparative Examples 1 to 8

The procedure of Example 1 was repeated except that the radiation curing compounds A and B were changed to those shown in Table 1.

The measurement methods were as follows.

### (1) Tackiness

After the radiation-cured layer was applied, tackiness toward a path roller was visually evaluated using the criteria below.
Poor: stuck to the path roller and could not be handled.
Good: could be handled but had a tendency to stick to the path roller.
Excellent: no sticking to the path roller and could be handled

### (2) Storage stability

A tape was stored in an environment of 60°C and 90% RH for one month while wound in a reel, and was then made to slide repeatedly for 10,000 passes at 100 mm/sec in an environment of 40°C and 80% RH while the surface of the magnetic layer was made to contact an SUS420 member with a load of 100 g, and the coefficient of friction was measured and expressed as a relative value when the coefficient of friction before storage was 1.

### (3) Number of dropouts

Measurement was carried out using a dropout counter for 1 minute while running a tape in a DDS4 drive at 23°C and 70% RH. Dropouts were defined as being a decrease of -5 dB for 1 sec or longer relative to the initial output. The number of dropouts was counted.

### (4) Electromagnetic conversion characteristics

Measurement was carried out by mounting a recording head (MIG gap 0.15 µm, 1.8 T) and an MR playback head on a drum tester.

The playback output was measured at a speed of the medium relative to the head of 1 to 3 m/min and a surface recording density of 0.88 Mbit/mm² (0.57 Gbit/(inch)²) and expressed as a relative value where the playback output of Comparative Example 1 was 0 dB.

The results obtained by measuring the magnetic recording tapes prepared in Examples 1 to 11 and Comparative Examples 1 to 8 are given in Table 1.

**(Table 1)**

| | Radiation curing compound | | Tackiness | Storage stability | Number of dropouts | Electromagnetic conversion characteristics (dB) |
|---|---|---|---|---|---|---|
| | Compound A | Compound B | | | | |
| Ex. 1 | A-1 | B-1 | Excellent | 1.2 | 23 | 1.2 |
| Ex. 2 | A-1 | B-2 | Excellent | 1.1 | 25 | 1.2 |
| Ex.3 | A-2 | B-2 | Excellent | 1.2 | 32 | 0.9 |
| Ex. 4 | A-3 | B-2 | Excellent | 1.2 | 23 | 1.1 |
| Ex. 5 | A-4 | B-2 | Excellent | 1.1 | 30 | 0.9 |
| Ex. 6 | A-5 | B-2 | Excellent | 1.2 | 35 | 1.0 |
| Ex.7 | A-6 | B-2 | Excellent | 1.3 | 25 | 1.3 |
| Ex. 8 | A-7 | B-2 | Excellent | 1.2 | 24 | 0.9 |
| Ex. 9 | A-5 | B-3 | Excellent | 1.2 | 38 | 1.2 |
| Ex. 10 | A-5 | B-4 | Excellent | 1.1 | 24 | 1.3 |
| Ex.11 | A-5 | B-5 | Excellent | 1.2 | 28 | 1.3 |
| Comp. Ex. 1 | - | B-1 | Poor | 2.5 | 89 | 0.0 |
| Comp. Ex. 2 | A-1 | - | Good | 2.1 | 75 | 0.4 |
| Comp. Ex. 3 | A-8 | B-2 | Poor | 2.6 | 102 | 0.1 |
| Comp. Ex. 4 | A-9 | B-2 | Poor | 2.7 | 101 | -0.2 |
| Comp. Ex. 5 | A-1 | B-6 | Good | 1.9 | 78 | 0.4 |
| Comp. Ex. 6 | A-1 | B-7 | Good | 1.7 | 75 | 0.3 |
| Comp. Ex. 7 | A-1 | B-8 | Good | 1.8 | 65 | 0.2 |
| Comp. Ex. 8 | A-1 | B-9 | Good | 1.5 | 68 | 0.3 |

### Compound A-1: bisphenol A ethylene oxide (4 mole) adduct diacrylate

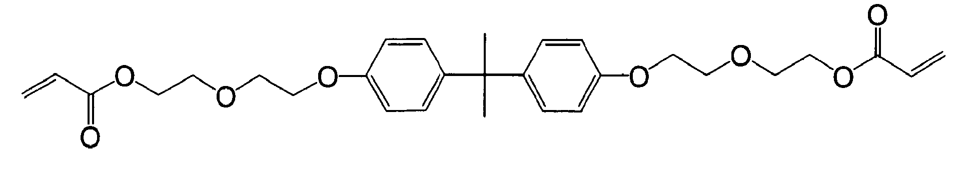

### Compound A-2: bisphenol A ethylene oxide (2 mole) adduct diacrylate

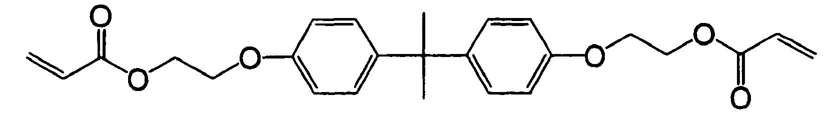

### Compound A-3: hydrogenated bisphenol A ethylene oxide (2 mole) adduct diacrylate

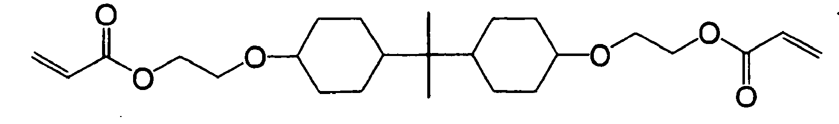

### Compound A-4: dihydroxybiphenyl ethylene oxide (2 mole) adduct diacrylate

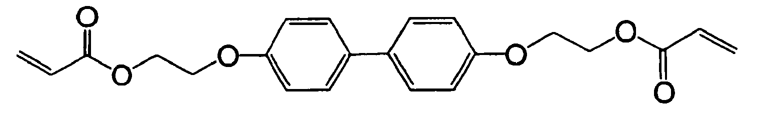

### Compound A-5:

### 5-ethyl-2-(2-hydroxy-1,1-dimethylethyl)-5-(hydroxymethyl)-1,3-dioxane diacrylate

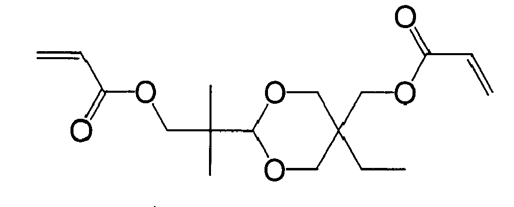

### Compound A-6: tetrahydrofurandimethanol diacrylate

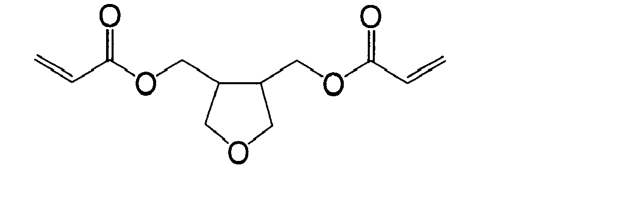

### Compound A-7:

### 3,9-bis(1,1-dimethylethyl)-2,4,8,10-tetraoxaspiro[5.5]undecane diacrylate

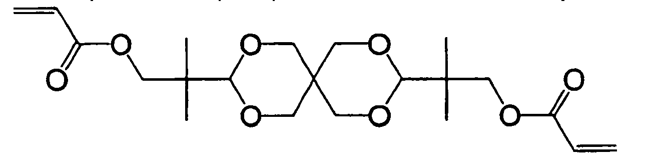

### Compound A-8: diethylene glycol diacrylate

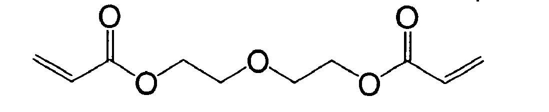

### Compound A-9: diethylene glycol dimethacrylate

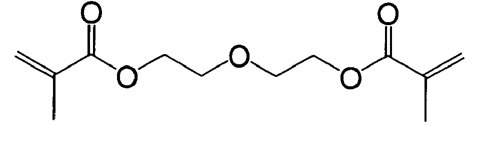

### Compound B-1: trimethylolpropane ethylene oxide adduct triacrylate

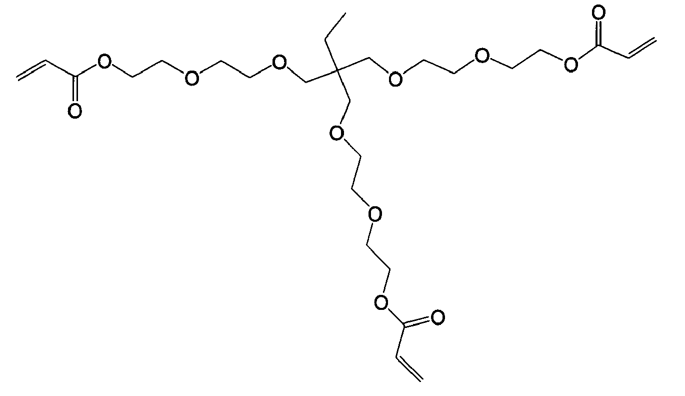

### Compound B-2: trimethylolpropane propylene oxide adduct triacrylate

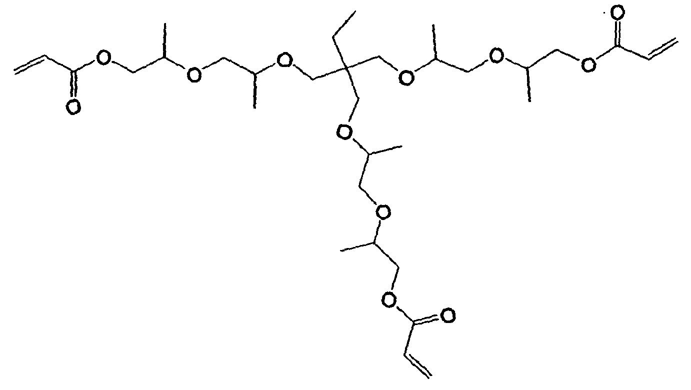

### Compound B-3: dipentaerythritol hexaacrylate

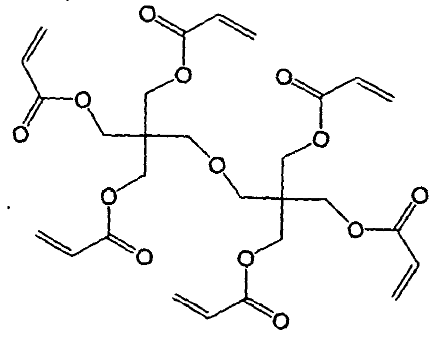

### Compound B-4: urethane acrylate of hexamethylene diisocyanate / pentaerythritol triacrylate

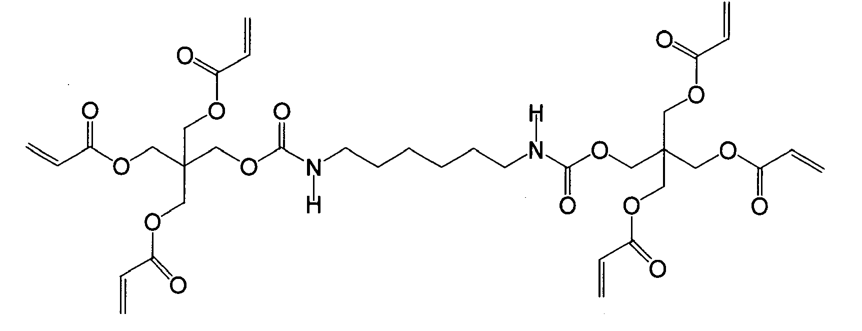

### Compound B-5: polyester acrylate of adipic acid / pentaerythritol triacrylate

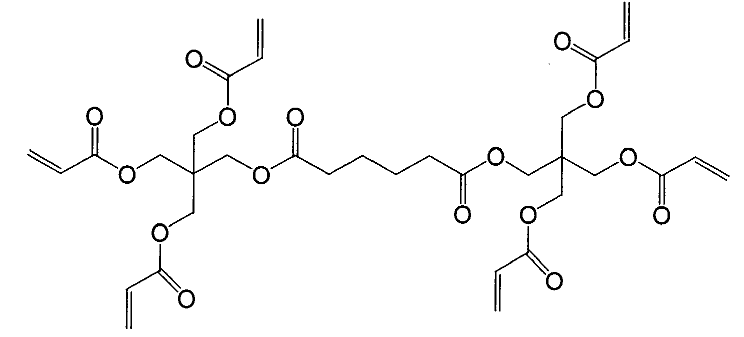

### Compound B-6: isocyanuric acid ethylene oxide adduct triacrylate

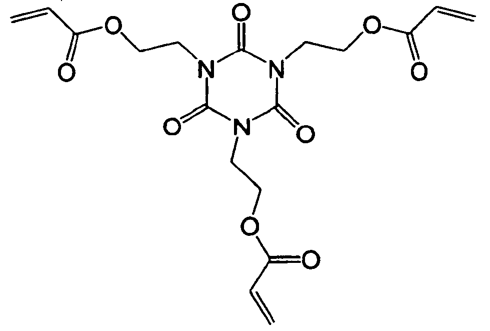

### Compound B-7: urethane acrylate of MDL / pentaerythritol triacrylate

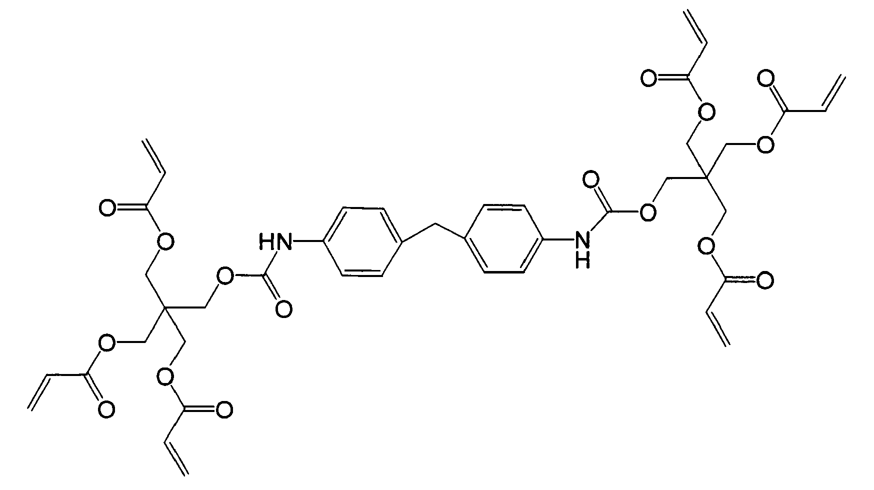

Compound B-8: urethane acrylate of norbornene diisocyanate / pentaerythritol triacrylate

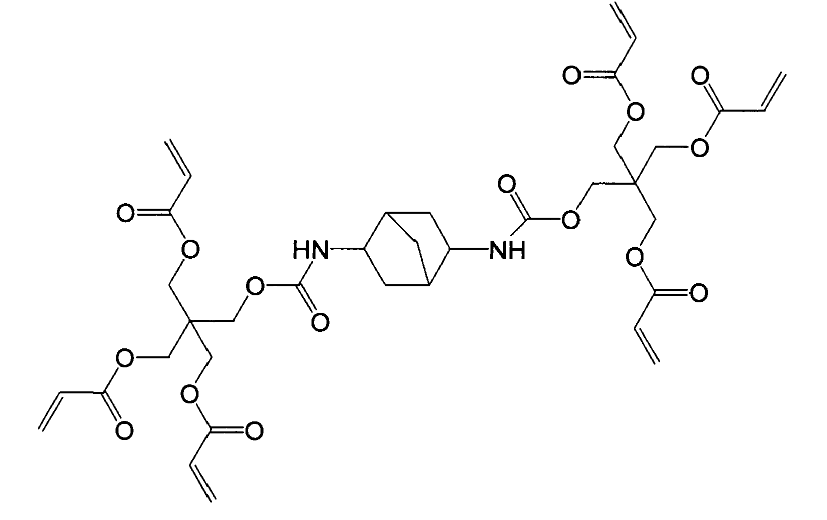

### Compound B-9: polyester acrylate of phthalic acid / pentaerythritol triacrylate

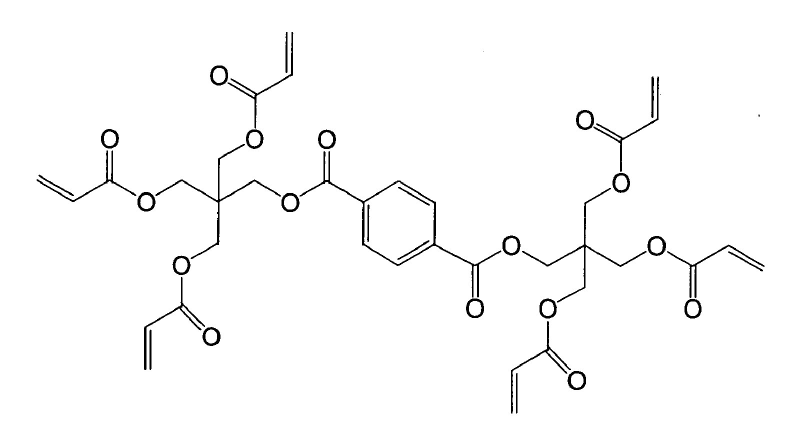

## Claims

1. A magnetic recording medium comprising;
a non-magnetic support and, above the support;
a radiation-cured layer cured by exposing a layer comprising a radiation curing compound to radiation; and
at least one magnetic layer comprising a ferromagnetic powder dispersed in a binder;
the radiation curing compound comprising a compound A having a cyclic structure and two radiation curing functional groups per molecule and a compound B having no cyclic structure and three or more radiation curing functional groups per molecule,
except for a magnetic recording medium obtained by coating the surface of a polyethylene terephthalate support having a thickness of 7 µm and a center plane average surface roughness Ra of 6.2 nm with a 30 wt % solution (MEK solution) of the radiation curing compound having a composition ratio of 40/60 of compounds b/k, d/k, a/k, a/l, a/m, h/k, j/k, g/k, g/l, g/m, a composition ratio of 20/80 of compounds a/k, or a composition ratio of 60/40 of compounds a/k by a coiled bar so that the dry thickness thereof was 0.5 µm, drying, and curing by irradiating the coating surface with an electron beam at an acceleration voltage of 150 kV and an absorbed dose of 5 Mrad, and subsequently, simultaneously coating the top of the radiation-cured layer by reverse roll with a magnetic coating solution so that the dry thickness thereof is 0.5 µm, subjecting to magnetic field alignment using a 5,000 G Co magnet and a 4,000G solenoid magnet before the magnetic coating solution is dried, and subjecting to a calender treatment employing a metal roll-metal roll-metal roll-metal roll-metal roll-metal roll-metal roll-metal roll combination (speed 100 m/min, line pressure 300 kg/cm, temperature 90°C) after the solvent is removed by drying, and then sliding to a whidth of 1/2 inch to give a magnetic tape,
and except for a magnetic recording medium obtained by coating the surface of a polyethylene terephthalate support having a thickness of 7 µm and a center plane average surface roughness Ra of 6.2 nm with a 30 wt % solution (MEK solution) of the radiation curing compound having a composition ratio of 40/60 of compounds a/k or g/k by a coiled bar so that the dry thickness thereof is 0.5 µm, drying, and curing by irradiating the coating surface with an electron beam at an acceleration voltage of 150 kV and an absorbed dose of 5 Mrad, and subsequently, coating the top of the radiation-cured layer with a non-magnetic coating solution which is prepared by grinding 100 parts of α-Fe2O3 (average particle size 0.15 µm, S_{BET} 52 m²/g, surface-treated with Al₂O₃ and SiO₂, pH 6.5 to 8.0) in an open kneader for 10 minutes, subsequently adding thereto 15 parts (solids content) of an SO₃Na-containing polyurethane solution (solids content 30%, SO₃Na content 70 µeq/g, weight-average molecular weight 80,000), and further adding thereto 30 parts of cyclohexanone and kneading the mixture for 60 minutes, and subsequently adding thereto 200 parts of methyl ethyl ketone/cyclohexanone (6/4), and dispersing the mixture in a sand mill for 120 minutes and adding to this mixture 2 parts of butyl stearate, 1 part of stearic acid and 50 parts of methyl ethyl ketone and stirring the mixture and mixing for a further 20 minutes, and filtering using a filter having an average pore size of 1 µm, so that the dry thickness thereof is 1.5 µm, on top of which being further applied a magnetic coating solution by simultaneous reverse roll multilayer coating so that the dry thickness thereof is 0.1 µm,
wherein the magnetic coating solution is prepared by grinding 100 parts of a ferromagnetic alloy powder. (composition: Fe 89 atm %, Co 5 atm %, Y 6 atm %, Hc 159.2 kA/m² (2,000 Oe), crystallite size 15 nm, S_{BET} 59 m²/g, major axis length 0.04 µm, acicular ratio 7, σs 150 A m ²/kg (emu/g)) in an open kneader for 10 minutes, subsequently adding thereto 10 parts (solids content) of an SO₃Na-containing polyurethane solution (solids content 30%, SO₃Na content 70 µeq/g, weight-average molecular weight 80, 000), and further adding thereto 30 parts of cyclohexanone and kneading the mixture for 60 minutes, and subsequently adding thereto 2 parts of an abrasive (Al₂O₃ particle size 0.3 µm) , 2 parts of carbon black (particle size 40 nm) and 200 parts of methyl ethyl ketone/toluene (1/1), and dispersing the mixture in a sand mill for 120 minutes, and further adding thereto 2 parts of butyl stearate, 1 part of stearic acid and 50 parts of methyl ethyl ketone, stirring the mixture and mixing for a further 20 minutes, and filtering using a filter having an average pore size of 1 µm to give the magnetic coating solution,
and wherein the radiation curing compounds a, b, d, g, h, j, k, l and m are as shown below:

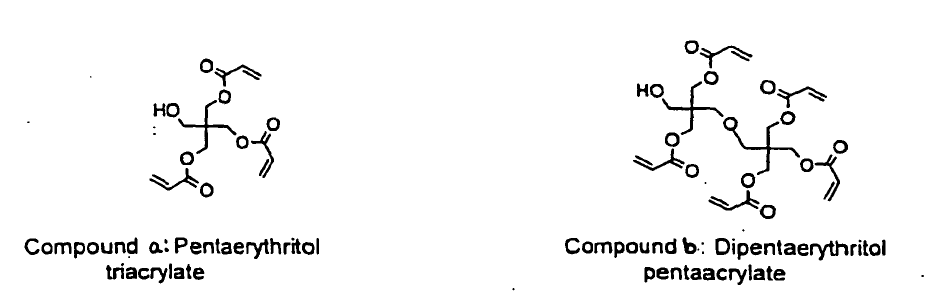

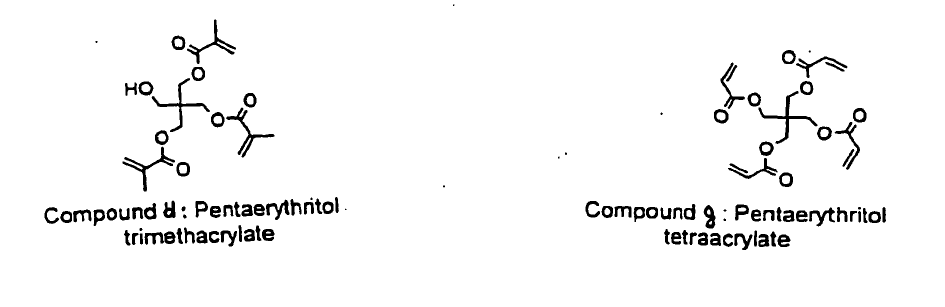

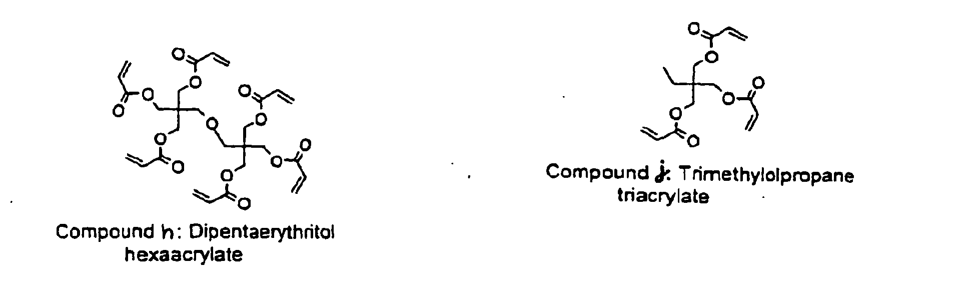

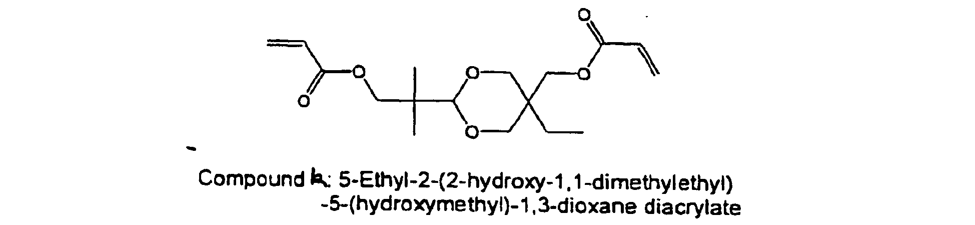

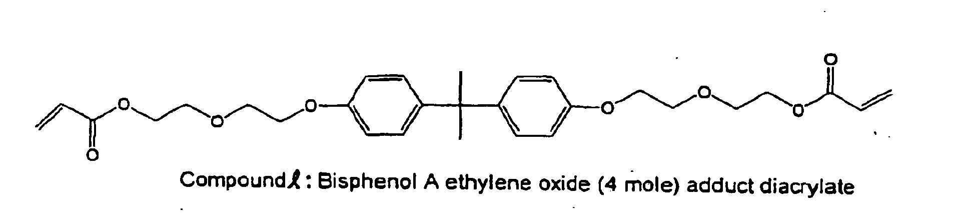

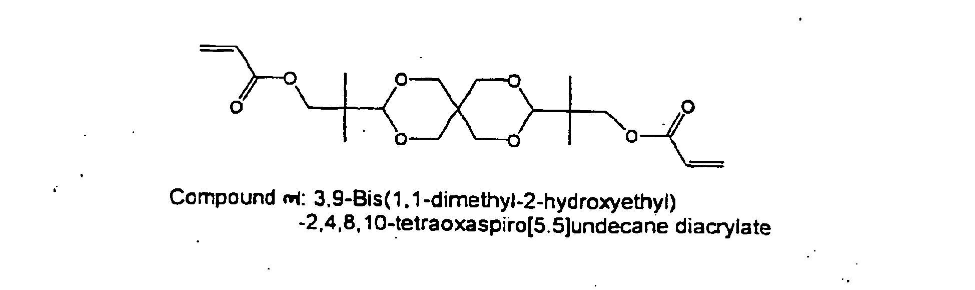

2. The magnetic recording medium according to Claim 1, wherein the compound A is a compound represented by formula (1) or formula (2),
B1-(A1)ₙ-X1-(A1')_{n'}-B1' (1)
B2-(A2)ₘ-X2-(A2')ₘ-B2' (2)
where X1 is selected from the group below, 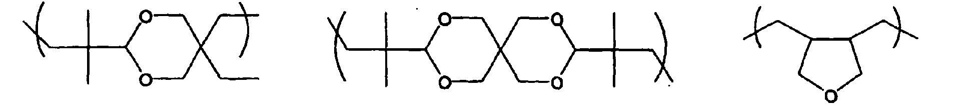
X2 is selected from the group below, 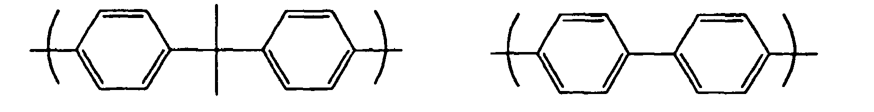 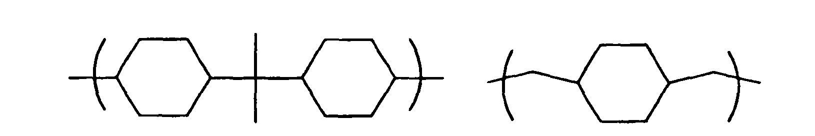
A1 and A2 are selected from the group below, 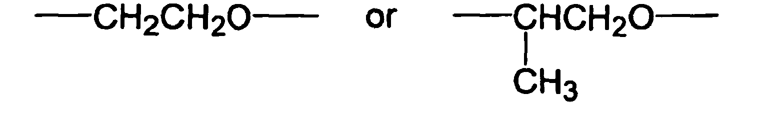 wherein A1 and A2 are bonded via an oxygen atom to X1 and X2 respectively, A1' and A2' are selected from the group below, 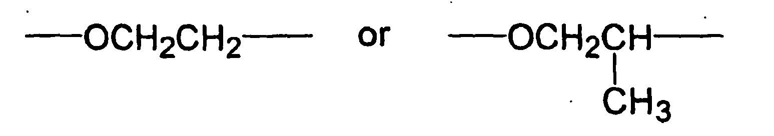 wherein A1' and A2' are bonded via an oxygen atom to X1 and X2 respectively,
B1, B2, B1', and B2' are selected from the group below, 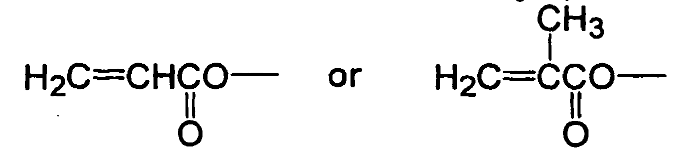
and n, n', m, and m' are independently 0 to 4.

3. The magnetic recording medium according to either Claim 1 or 2, wherein the compound B is a compound having at least one ether group per molecule.

4. The magnetic recording medium according to any one of Claim 1 to 3, wherein the magnetic recording medium comprises, between the radiation-cured layer and the magnetic layer, a non-magnetic layer comprising a non-magnetic powder dispersed in a binder.

5. The magnetic recording medium according to any one of Claim 1 to 4, wherein the radiation curing functional group of the compound A is an acryloyl group.

6. The magnetic recording medium according to any one of Claim 1 to 5, wherein the compound B is a compound having 3 to 6 radiation curing functional groups.

7. The magnetic recording medium according to any one of Claim 1 to 6, wherein the radiation curing functional group of the compound B is an acryloyl group.

8. The magnetic recording medium according to any one of Claim 1 to 7, wherein the compound A and the compound B are used at a ratio by weight of 3/7 to 7/3.

9. The magnetic recording medium according to any one of Claim 1 to 8, wherein the radiation-cured layer has a thickness of 0.1 to 1.0 µm.

10. The magnetic recording medium according to any one of Claim 1 to 9, wherein the magnetic layer has a thickness of 0.05 to 0.5 µm.

## Patentansprüche

1. Magnetisches Aufzeichnungsmedium, umfassend:
einen nicht-magnetischen Träger und auf dem Träger
eine strahlungsgehärtete Schicht, die durch Bestrahlen einer Schicht, umfassend eine strahlungshärtbare Zusammensetzung, gehärtet wurde; und
wenigstens eine magnetische Schicht, die ein in einem Bindemittel dispergiertes ferromagnetisches Pulver umfasst;
wobei die strahlungshärtbare Verbindung eine Verbindung (A), die eine cyclische Struktur und zwei strahlungshärtbare funktionelle Gruppen pro Molekül aufweist, und eine Verbindung (B), die keine cyclische Struktur aufweist und drei oder mehr strahlungshärtbare funktionelle Gruppen pro Molekül besitzt, umfasst,
ausgenommen ein magnetisches Aufzeichnungsmedium, das durch Beschichten der Oberfläche eines Polyethylenterephthalatträgers, der eine Dicke von 7 µm und eine mittlere Zentralflächen-Oberflächenrauhigkeit (Ra) von 6,2 nm aufweist, mit einer 30 Gew.%-igen Lösung (MEK-Lösung) der strahlungshärtbaren Verbindung, die ein Zusammensetzungsverhältnis von 40:60 der Verbindungen b/k, d/k, a/k, a/ℓ, a/m, h/k, j/k, g/k, g/ℓ, g/m, ein Zusammensetzungsverhältnis von 20:80 der Verbindungen a/k, oder ein Zusammensetzungsverhältnis von 60:40 der Verbindungen a/k aufweist, durch einen Spiralholm, so dass die Trockendicke hiervon 0,5 µm betrug, Trocknen und Härten der Beschichtungsoberfläche mit einem Elektronenstrahl bei einer Beschleunigungsspannung von 150 kV und einer absorbierten Dosis von 5 Mrad, und anschliessendem gleichzeitigen Beschichten der Oberfläche der strahlungsgehärteten Schicht durch eine Umkehrwalze mit einer magnetischen Beschichtungslösung, so dass die Trockendicke hiervon 0,5 µm ist, Durchführen einer Magnetfeldausrichtung unter Verwendung eines 5.000 G Co-Magneten und einer 4.000 G Magnetspule, bevor die magnetische Beschichtungslösung getrocknet wird, und Durchführen einer Glättwerkbehandlung unter Verwendung einer Metall/Walze-Metall/Walze-Metall/Walze-Metall/Walze-Metall/Walze-Metall/Walze-Metall/Walze-Metall/Walze-Kombination (Geschwindigkeit: 100 m/min, Systemdruck: 300 kg/cm, Temperatur: 90°C), nachdem das Lösungsmittel durch Trocknen entfernt worden war, und anschliessendem Schleifen zu einer Breite von 1/2 inch, um ein magnetisches Band zu erhalten, erhalten wird,
und mit Ausnahme eines magnetischen Aufzeichnungsmediums, das durch Beschichten der Oberfläche eines Polyethylenterephthalatträgers mit einer Dicke von 7 µm und einer mittleren Zentralflächen-Oberflächenrauhigkeit (Ra) von 6,2 nm mit einer 30 Gew.%-igen Lösung (MEK-Lösung) der strahlungshärtbaren Verbindung, die ein Zusammensetzungsverhältnis von 40:60 der Verbindungen a/k oder g/k aufweist, durch einen Spiralholm, so dass die Trockendicke hiervon 0,5 µm beträgt, Trocknen und Härten durch Bestrahlen der Beschichtungsoberfläche mit einem Elektronenstrahl bei einer Beschleunigungsspannung von 150 kV und einer absorbierten Dosis von 5 Mrad, und anschliessendem Beschichten der Oberfläche der strahlungsgehärteten Schicht mit einer nicht-magnetischen Beschichtungslösung, die hergestellt wird durch Mahlen von 100 Teilen α-Fe₂O₃ (durchschnittliche Teilchengrösse: 0,15 µm, S_{BET}: 52 m²/g, mit Al₂O₃ und SiO₂ oberflächenbehandelt, pH 6,5 bis 8,0) in einem offenen Mischer für 10 Minuten und anschliessendem Zufügen von 15 Teilen (Feststoffgehalt) einer SO₃ enthaltenden Polyurethanlösung (Feststoffgehalt: 30 %, SO₃N Gehalt: 70 µäq/g, gewichtsgemitteltes Molekulargewicht: 80.000) und weiterem Zugeben von 30 Teilen Cyclohexanon und Kneten der Mischung für 60 Minuten, und anschliessendem Zugeben von 200 Teilen Methylethylketon/Cyclohexanon (6:4), und Dispergieren der Mischung in einer Sandmühle für 120 Minuten und Zugeben von 2 Teilen Butylstearat, 1 Teil Stearinsäure und 50 Teilen Methylethylketon zu dieser Mischung, und Rühren der Mischung und Vermischen für weitere 20 Minuten, und Filtrieren unter Verwendung eines Filters, der eine durchschnittliche Porengrösse von 1 µm aufweist, so dass die Trockendicke hiervon 1,5 µm beträgt, wobei auf diese Oberfläche zusätzlich eine magnetische Beschichtungslösung durch gleichzeitiges Umkehrwalzen-Vielschichtbeschichten aufgetragen wird, so dass die Trockendicke hiervon 0,1 µm beträgt,
wobei die magnetische Beschichtungslösung hergestellt wird durch Mahlen von 100 Teilen eines ferromagnetischen Legierungspulvers (Zusammensetzung: Fe 89 Atom-%, Co 5 Atom-%, Y 6 Atom-%, Hc 159,2 kA/m² (2.000 Oe), Kristallitgrösse: 15 nm, S_{BET}: 59 m²/g, Hauptachsenlänge: 0,04 µm, Acicularverhältnis: 7, σs: 150 A m²/kg (emu/g)) in einem offenen Mischer für 10 Minuten, anschliessendem Zugeben von 10 Teilen (Feststoffgehalt) einer SO₃Na enthaltenden Polyurethanlösung (Feststoffgehalt: 30 %, SO₃Na-Gehalt: 70 µäq/g, gewichtsgemitteltes Molekulargewicht: 80.000) und zusätzlichem Zugeben von 30 Teilen Cyclohexanon und Kneten der Mischung für 60 Minuten und anschliessendem Zugeben von 2 Teilen eines Schleifmittels (Al₂O₃-Teilchengrösse: 0,3 µm), 2 Teilen Russ (Teilchengrösse: 40 nm) und 200 Teilen Methylethylketon/Toluol (1:1), und Dispergieren der Mischung in einer Sandmühle für 120 Minuten und zusätzliches Zugeben von 2 Teilen Butylstearat, 1 Teil Stearinsäure und 50 Teilen Methylethylketon, Rühren der Mischung und Vermischen für weitere 20 Minuten, und Filtrieren unter Verwendung eines Filters mit einer durchschnittlichen Porengrösse von 1 µm, um die magnetische Beschichtungslösung zu ergeben, erhalten wird,
und worin die strahlungshärtbaren Verbindungen a, b, d, g, h, j, k, ℓ und m wie unten gezeigt sind:

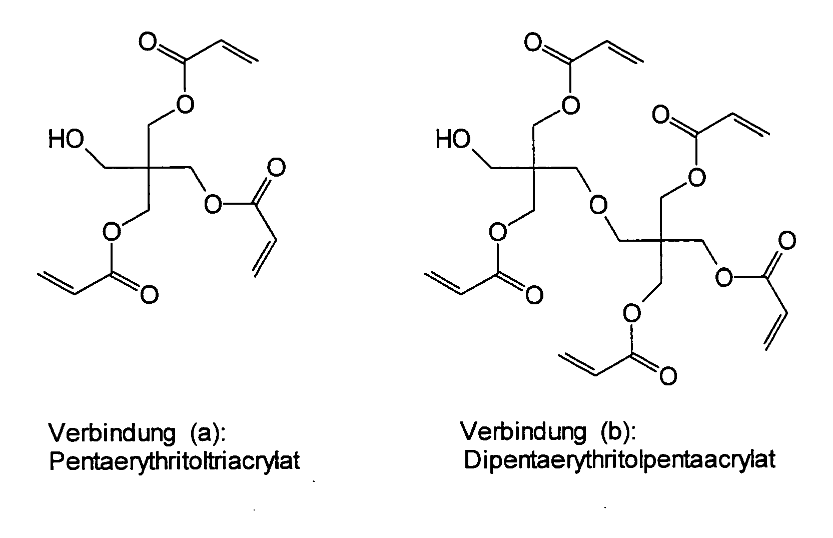

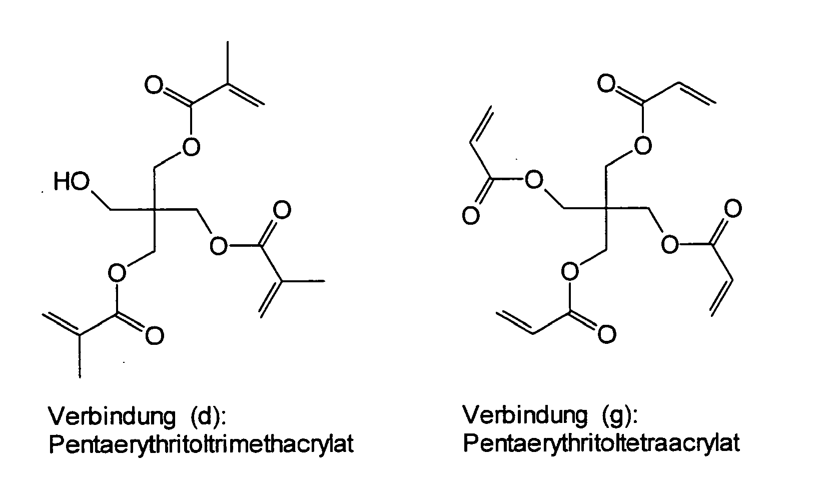

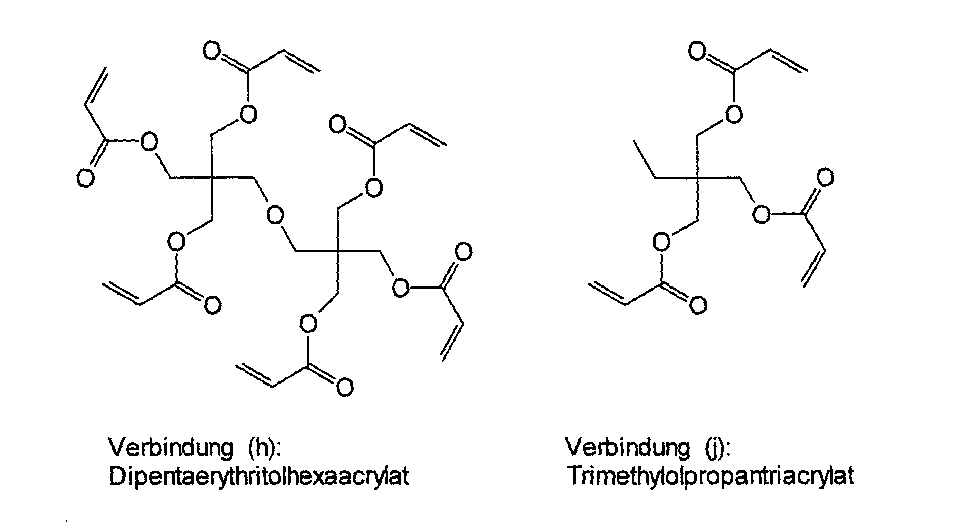

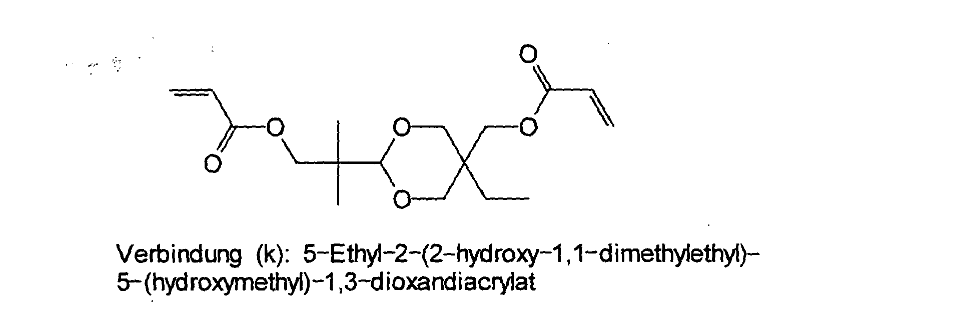

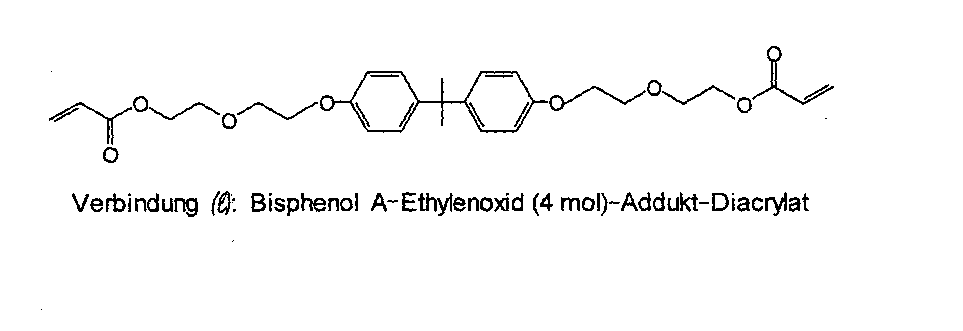

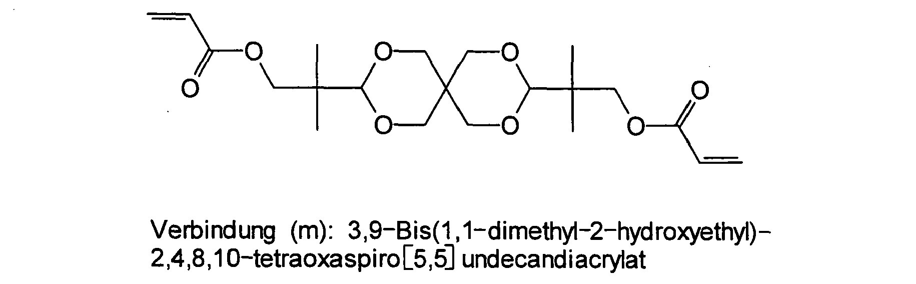

2. Magnetisches Aufzeichnungsmedium gemäss Anspruch 1, worin die Verbindung (A) eine Verbindung der Formeln (1) oder (2) ist:
B1-(A1)ₙ-X1-(A1')ₙ'- B1' (1)
B2-(AZ)ₘ-X2-(A2')_{m'}- B2' (2)
worin X1 aus der nachstehenden Gruppe ausgewählt ist: 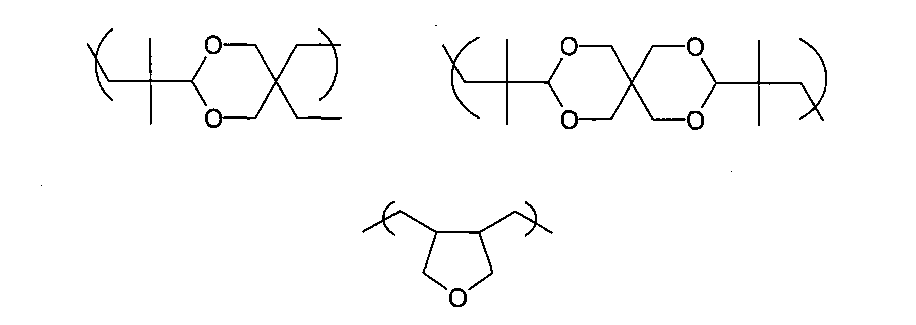
X2 aus der nachstehenden Gruppe ausgewählt ist: 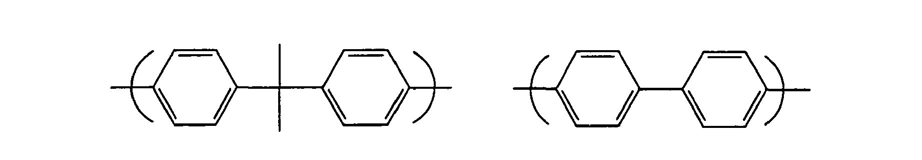 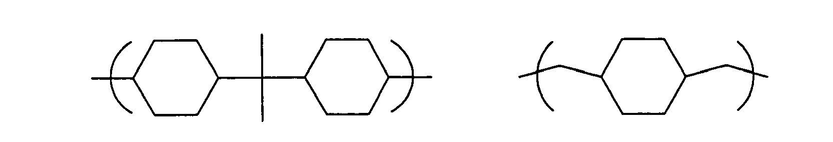
A1 und A2 aus der nachstehenden Gruppe ausgewählt sind: 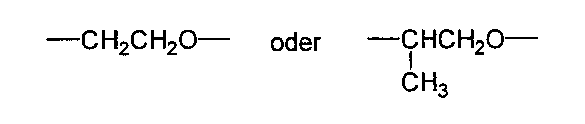 worin A1 und A2 über ein Sauerstoffatom an X1 bzw. X2 gebunden sind,
A1' und A2' aus der nachstehenden Gruppe ausgewählt sind: 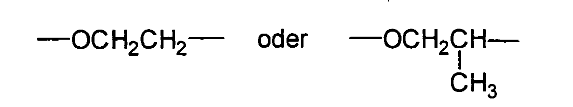 worin A1' und A2' über ein Sauerstoffatom an X1 bzw. X2 gebunden sind,
B1, B2, B1' und B2' aus der nachstehenden Gruppe ausgewählt sind: 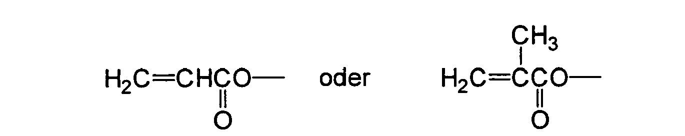
und n, n', m und m' unabhängig 0 bis 4 sind.

3. Magnetisches Aufzeichnungsmedium gemäss Anspruch 1 oder 2, worin die Verbindung (B) eine Verbindung mit wenigstens einer Ethergruppe pro Molekül ist.

4. Magnetisches Aufzeichnungsmedium gemäss einem der Ansprüche 1 bis 3, worin das magnetische Aufzeichnungsmedium zwischen der strahlungsgehärteten Schicht und der magnetischen Schicht eine nichtmagnetische Schicht umfasst, die ein in einem Bindemittel dispergiertes nicht-magnetisches Pulver umfasst.

5. Magnetisches Aufzeichnungsmedium gemäss einem der Ansprüche 1 bis 4, worin die strahlungshärtbare funktionelle Gruppe der Verbindung (A) eine Acryloylgruppe ist.

6. Magnetisches Aufzeichnungsmedium gemäss einem der Ansprüche 1 bis 5, worin die Verbindung (B) eine Verbindung ist, die 3 bis 6 strahlungshärtbare funktionelle Gruppen aufweist.

7. Magnetisches Aufzeichnungsmedium gemäss einem der Ansprüche 1 bis 6, worin die strahlungshärtbare funktionelle Gruppe der Verbindung (B) eine Acryloylgruppe ist.

8. Magnetisches Aufzeichnungsmedium gemäss einem der Ansprüche 1 bis 7, worin die Verbindung (A) und die Verbindung (B) in einem Gewichtsverhältnis von 3:7 bis 7:3 verwendet werden.

9. Magnetisches Aufzeichnungsmedium gemäss einem der Ansprüche 1 bis 8, worin die strahlungsgehärtete Schicht eine Dicke von 0,1 bis 1,0 µm aufweist.

10. Magnetisches Aufzeichnungsmedium gemäss einem der Ansprüche 1 bis 9, worin die magnetische Schicht eine Dicke von 0,05 bis 0,5 µm aufweist.

## Revendications

1. Support d'enregistrement magnétique comprenant;
un support non magnétique et, au-dessus du support ;
une couche durcie par radiation durcie en exposant une couche comprenant un composé durcissable par radiation à une radiation ; et
au moins une couche magnétique comprenant une poudre ferromagnétique dispersée dans un liant ;
le composé durcissable par radiation comprenant un composé A ayant une structure cyclique et deux groupes fonctionnels durcissables par radiation par molécule et un composé B n'ayant pas de structure cyclique et trois ou plus groupes fonctionnels durcissables par radiation par molécule,
excepté pour un support d'enregistrement magnétique obtenu en revêtant la surface d'un support en poly(téréphtalate d'éthylène) ayant une épaisseur de 7 µm et une rugosité de surface moyenne de plan central Ra de 6,2 nm avec une solution à 30 % en poids (solution MEK) du composé durcissable par radiation ayant un rapport de composition de 40/60 de composés b/k, d/k, a/k, a/l, a/m, h/k, j/k, g/k, g/l, g/m, un rapport de composition de 20/80 de composés a/k ou un rapport de composition de 60/40 de composés a/k par une barre enroulée de sorte que l'épaisseur sèche de celle-ci était de 0,5 µm, en séchant, et en durcissant en irradiant la surface de revêtement avec un faisceau d'électron à une tension d'accélération de 150 kV et une dose absorbée de 5 Mrad, et ultérieurement, en revêtant simultanément le sommet de la couche durcie par radiation par cylindre inverse avec une solution de revêtement magnétique de sorte que l'épaisseur sèche de celle-ci est de 0,5 µm, en soumettant un alignement de champ magnétique en utilisant un aimant de 5 000 G Co et un électroaimant de 4 000 G avant que la solution de revêtement magnétique ne soit séchée, et en soumettant un traitement de calandrage employant une combinaison cylindre métallique-cylindre métallique-cylindre métallique-cylindre métallique-cylindre métallique-cylindre métallique-cylindre métallique-cylindre métallique (vitesse 100 m/min, pression de fluide 300 kg/cm, température 90 °C) après que le solvant est éliminé par séchage, puis en glissant à une largeur de 1/2 pouce pour donner une bande magnétique,
et excepté pour un support d'enregistrement magnétique obtenu en revêtant la surface d'un support de poly(téréphtalate d'éthylène) ayant une épaisseur de 7 µm et une rugosité de surface moyenne de plan central Ra de 6,2 nm avec une solution à 30 % en poids (solution MEK) du composé durcissable par radiation ayant un rapport de composition de 40/60 de composés a/k ou g/k par une barre enroulée de sorte que l'épaisseur sèche de celle-ci est de 0,5 µm, en séchant, et en durcissant en irradiant la surface de revêtement avec un faisceau d'électron à une tension d'accélération de 150 kV et une dose absorbée de 5 Mrad, et ultérieurement, en revêtant le sommet de la couche durcie par radiation avec une solution de revêtement non magnétique qui est préparée en broyant 100 parties de α-Fe₂O₃ (taille moyenne de particule de 0,15 µm, S_{BET} 52 m²/g, traitée en surface avec du Al₂O₃ et du SiO₂, pH de 6,5' à 8,0) dans un malaxeur ouvert pendant 10 minutes, en ajoutant ultérieurement à celui-ci 15 parties (teneur en solides) d'une solution de poly(uréthane) contenant du SO₃Na (teneur en solides de 30 %, teneur en SO₃Na de 70 µéq/g, masse moléculaire moyenne en masse de 80 000), et en ajoutant en plus à celui-ci 30 parties de cyclohexanone et en mélangeant pendant 60 minutes, et en ajoutant à celui-ci ultérieurement 200 parties de méthyl éthyl cétone/cyclohexanone (6/4), et en dispersant le mélange dans un broyeur à sable pendant 120 minutes et en ajoutant à ce mélange 2 parties de stéarate de butyle, 1 partie d'acide stéarique et 50 parties de méthyl éthyl cétone et en agitant le mélange et mélangeant pendant 20 minutes supplémentaires, et en filtrant en utilisant un filtre ayant une taille moyenne de pore de 1 µm, de sorte que l'épaisseur sèche de celui-ci est de 1,5 µm, sur le dessus duquel est également appliquée une solution de revêtement magnétique par revêtement multicouche par revêtement inversé simultané de sorte que l'épaisseur sèche de celui-ci est de 0,1 µm,
dans lequel la solution de revêtement magnétique est préparée en broyant 100 parties d'une poudre d'alliage ferromagnétique (composition : Fe 89 % atomique, Co 5 % atomique, Y 6 % atomique, Hc 159,2 kA/m² (2 000 Oe), taille des cristallites de 15 nm, S_{BET} 59 m²/g, longueur d'axe majeur 0,04 µm, rapport aciculaire 7, σs 150 A m²/kg (emu/g) dans un malaxeur ouvert pendant 10 minutes, en y ajoutant ultérieurement 10 parties (teneur en solides) d'une solution de poly(uréthane) contenant du SO₃Na (teneur en solides de 30 %, teneur en SO₃Na de 70 µéq/g, masse moléculaire moyenne en masse de 80 000), et en y ajoutant également 30 parties de cyclohexanone et en malaxant le mélange pendant 60 minutes, et en y ajoutant ultérieurement 2 parties d'un abrasif (taille de particule de Al₂O₃ de 0,3 µm), 2 parties de noir de carbone (taille de particule de 40 nm) et 200 parties de méthyl éthyl cétone/toluène (1/1), et en dispersant le mélange dans un broyeur à sable pendant 120 minutes, et en y ajoutant également 2 parties de stéarate de butyle, 1 partie d'acide stéarique et 50 parties de méthyl éthyl cétone, en ajoutant le mélange et en mélangeant pendant 20 minutes supplémentaires, et en filtrant en utilisant un filtre ayant une taille moyenne de pore de 1 µm pour donner la solution de revêtement magnétique,
et dans lequel les composés durcissables par radiation a, b, d, g, h, j, k, l'et m sont tels que montrés ci-dessous :

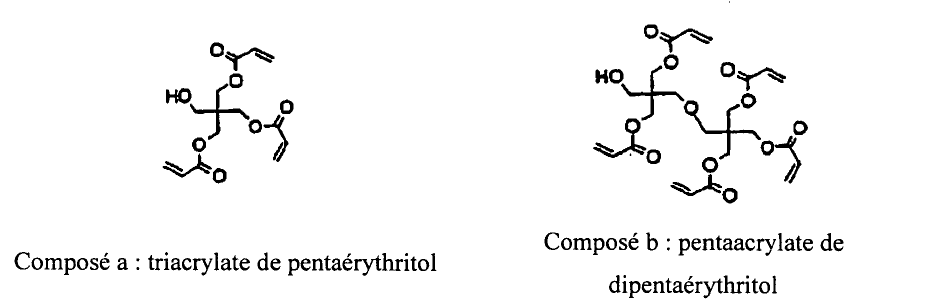

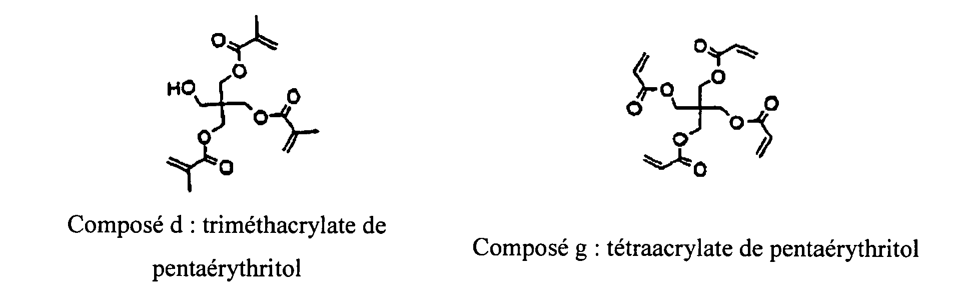

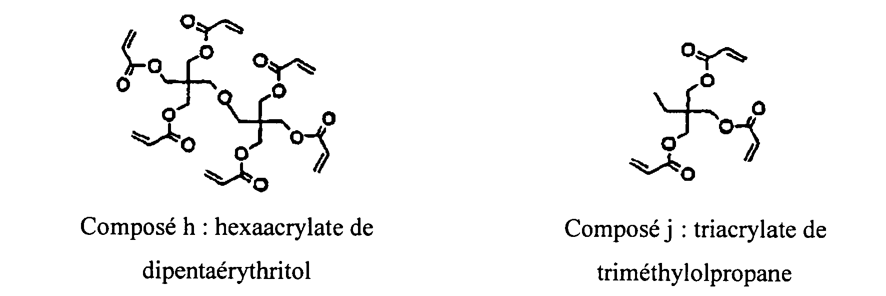

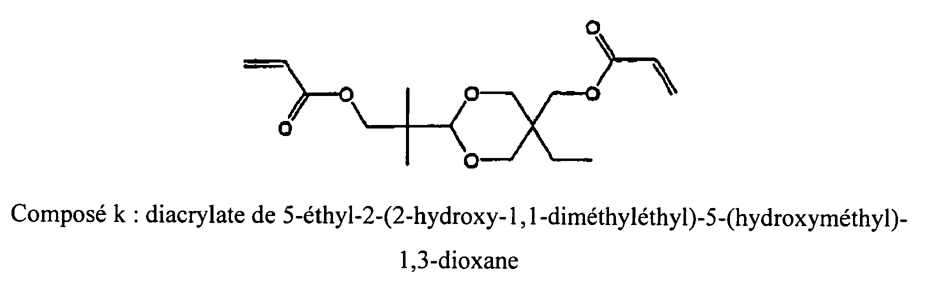

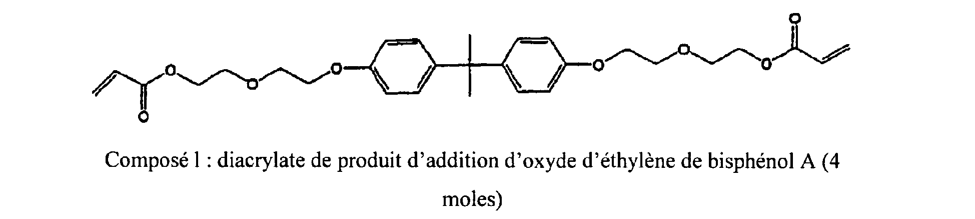

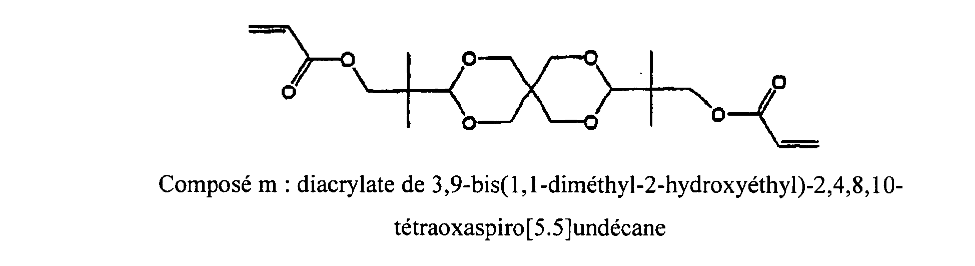

2. Support d'enregistrement magnétique selon la revendication 1, dans lequel le composé A est un composé représenté par la formule (1) ou la formule (2),
B1-(A1)ₙ-X1-(A1')_{n'}-B1 (1)
B2-(A2)ₘX2-(A2')_{m'}-B2 (2)
où X1 est choisi dans le groupe ci-dessous, 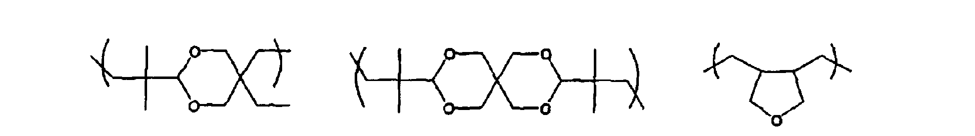 où X2 est choisi dans le groupe ci-dessous, 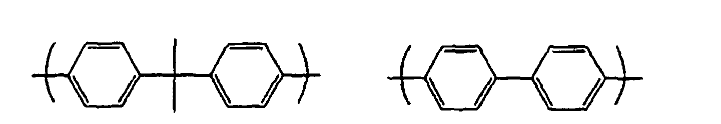 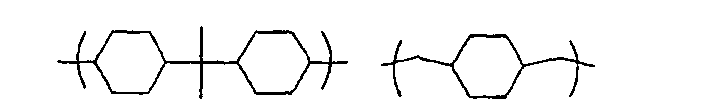
A1 et A2 sont choisis dans le groupe ci-dessous, 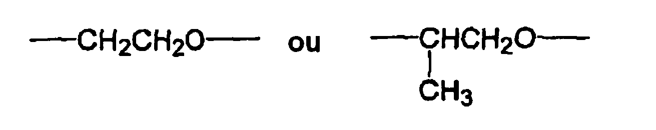 où A1 et A2 sont liés via un atome d'oxygène à X1 et X2 respectivement,
A1' et A2' sont choisis dans le groupe ci-dessous, 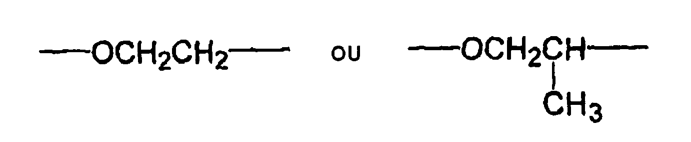 où A1' et A2' sont liés via un atome d'oxygène à X1 et X2 respectivement,
B1, B2, B1' et B2' sont choisis dans le groupe ci-dessous, 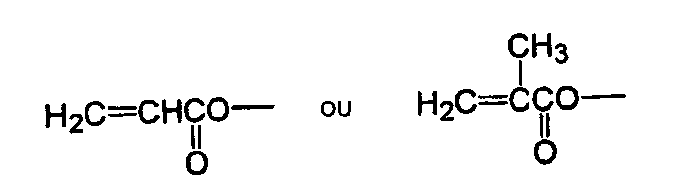
et n, n', m et m' sont indépendamment 0 à 4.

3. Support d'enregistrement magnétique selon l'une de la revendication 1 ou de la revendication 2, dans lequel le composé B est un composé ayant au moins un groupe éther par molécule.

4. Support d'enregistrement magnétique selon l'une quelconque des revendications 1 à 3, dans lequel le support d'enregistrement magnétique comprend, entre la couche durcie par radiation et la couche magnétique, une couche non magnétique comprenant une poudre non magnétique dispersée dans un liant.

5. Support d'enregistrement magnétique selon l'une quelconque des revendications 1 à 4, dans lequel le groupe fonctionnel durcissable par radiation du composé A est un groupe acryloyle.

6. Support d'enregistrement magnétique selon l'une quelconque des revendications 1 à 5, dans lequel le composé B est un composé ayant 3 à 6 groupes fonctionnels durcissables par radiation.

7. Support d'enregistrement magnétique selon l'une quelconque des revendications 1 à 6, dans lequel le groupe fonctionnel durcissable par radiation du composé B est un groupe acryloyle.

8. Support d'enregistrement magnétique selon l'une quelconque des revendications 1 à 7, dans lequel le composé A et le composé B sont utilisés à un rapport en poids de 3/7 à 7/3.

9. Support d'enregistrement magnétique selon l'une quelconque des revendications 1 à 8, dans lequel la couche durcie par radiation a une épaisseur de 0,1 à 1,0 µm.

10. Support d'enregistrement magnétique selon l'une quelconque des revendications 1 à 9, dans lequel la couche magnétique a une épaisseur de 0,05 à 0,5 µm.
